# EUROPEAN PATENT APPLICATION

(11) **EP 1 302 858 A1**
(43) Date of publication of application: **16.04.2003**
(21) Application number: 01934420.9
(22) Date of filing: 30.05.2001
(51) Int. Cl.: G06F 13/38, G06F 5/06

(54) **DATA PROCESSING SYSTEM, AND DATA PROCESSING METHOD**

(30) Priority: 30.05.2000 JP 2000159872
(71) Applicant: MATSUSHITA ELECTRIC INDUSTRIAL CO., LTD., Kadoma-shi, Osaka 571-8501 (JP)
(72) Inventor: OHASHI, Masahiro, Kasuya-gun, Fukuoka 811-2413 (JP); HASHIMOTO, Koukichi, Kawasaki-shi, Kanagawa 216-0015 (JP)
(74) Representative: Balsters, Robert
(86) International application number: JP0104549
(87) International publication number: WO01093051

(57) **Abstract**

According to a data processing apparatus and a data processing method of the present invention, supply of clocks is controlled according to various kinds of processing commands which are issued from a command issuing source and, when a first buffer memory underflows, a data transfer request is made without terminating a data processing command, and data processing is resumed at the completion of a data transfer command.

Therefore, supply of clocks can be stopped when data are not transferred and when data are not processed, whereby power consumption can be reduced. Further, when the first buffer memory underflows, it is not necessary for the command issuing source to issue a data processing command again, whereby the number of commands to be issued can be reduced.

## Description

### TECHNICAL FIELD

The present invention relates a data processing apparatus and a data processing method for performing variable-length decoding and variable-length coding in an image compression/decompression coding system.

### BACKGROUND ART

As methods for performing coding and decoding on motion picture data using band compression techniques, there are MPEG (Moving Picture Coding Experts Group) standardized by ISO, H.263 recommended by ITU-T, and the like. These methods are based on processing in which an image is divided into blocks each comprising plural pixels by utilizing correlations in the image, data in each block are subjected to discrete cosine transformation that is a kind of an orthogonal conversion method, and the transformed data are subjected to quantization and variable-length coding, thereby realizing coding of image data. Further, decoding of image data is based on reverse processing to the above-mentioned processing.

Hereinafter, a conventional variable-length decoding method will be described.

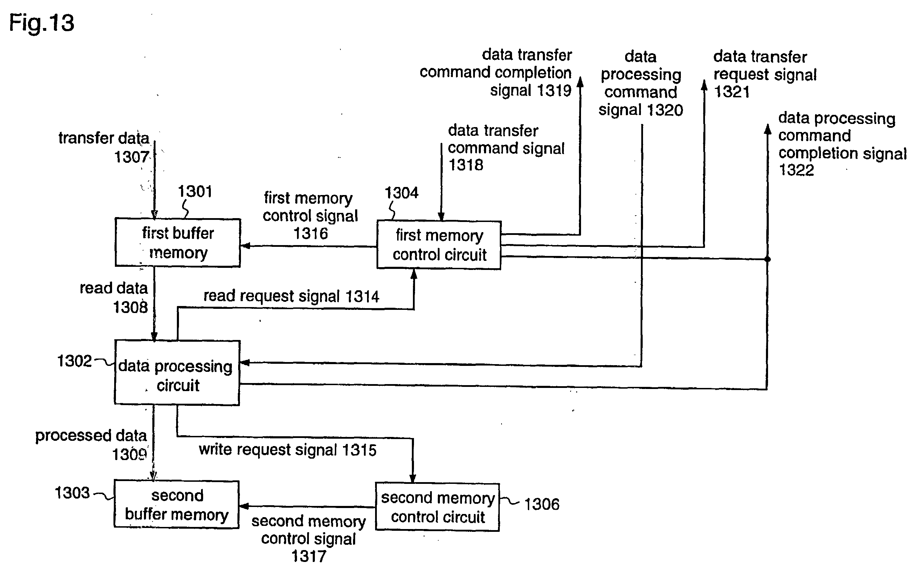

Figure 13 is a block diagram illustrating the construction of a conventional data processing apparatus.

In figure 13, reference numeral 1301 denotes a first buffer memory in which transfer data 1307 is stored. Reference numeral 1302 denotes a data processing circuit which performs variable-length decoding on read data 1308 which is read from the first buffer memory 1301. Reference numeral 1303 denotes a second buffer memory in which processed data 1309 that is processed in the data processing circuit 1302 is stored. Reference numeral 1304 denotes a first memory control circuit which outputs, to the first buffer memory 1301, a first memory control signal 1316 for writing the transfer data 1307 into the first buffer memory 1301, or reading the transfer data (read data) 1308, which is written in the first buffer memory 1301, to the data processing circuit 1302. Further, the first memory control circuit 1304 judges whether the first buffer memory 1301 underflows or not, before performing data processing. Reference numeral 1306 denotes a second memory control circuit which outputs, to the second buffer memory 1303, a second memory control signal 1317 for writing the processed data 1309 which is processed by the data processing circuit 1302 into the second buffer memory 1303.

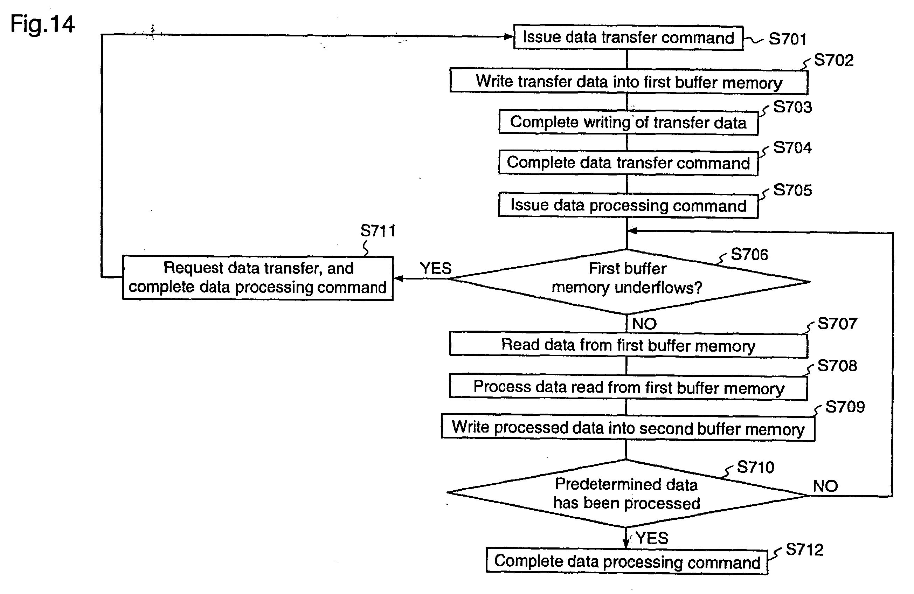

Hereinafter, a data processing method of the data processing apparatus constructed as described above will be described with reference to figure 14.

Initially, a command issuing source, e.g., a processor, issues a data transfer command for writing the transfer data 1307 into the first buffer memory 1301, as a data transfer command signal 1318, to the first memory control circuit 1304 (S701).

On receipt of the data transfer command signal 1318, the first memory control circuit 1304 outputs a first memory control signal 1316 for writing the transfer data 1307, to the first buffer memory 1301. Thereby, the transfer data 1307 is written into the first buffer memory 1301 (S702).

When writing into the first buffer memory 1301 is completed (S703), the first memory control circuit 1304 outputs a data transfer command completion signal 1319 to the processor to end the data transfer (S704).

Next, the processor issues a data processing command signal 1320 to the data processing circuit 1302 (S705).

On receipt of the data processing command signal 1320, the data processing circuit 1302 outputs a read request signal 1314 to the first memory control circuit 1304. Then, the first memory control circuit 1304 judges whether the first buffer memory 1301 underflows or not (S706).

When it is judged in step S706 that the first buffer memory 1301 does not underflow, the first memory control circuit 1304 outputs a first memory control signal 1316 for reading the read data 1308 stored in the first buffer memory 1301, to the first buffer memory 1301. Thereby, the read data 1308 stored in the first buffer memory 1301 is read to the data processing circuit 1302 (S707).

Then, the first data processing circuit 1302 performs data processing on the read data 1308 (S708). Thereafter, the data processing circuit 1302 outputs a write request signal 1315 to the second memory control circuit 1306, and the second memory control circuit 1306 outputs a second memory control signal 1317 for writing the processed data 1309, to the second buffer memory 1303. Thereby, the processed data 1309 is written into the second buffer memory 1303 (S709).

Then, the data processing circuit 1302 judges whether predetermined data (one block of image data comprising 64 pieces of data, one macroblock of image data comprising 64×4 pieces of data, or the like) have been processed or not (S710). When it is judged that the predetermined data have not yet been processed, the processes in steps S706∼S710 are repeated until the predetermined data is processed. When it is judged that the predetermined data have been processed, the data processing circuit 1302 outputs a data processing command completion signal 1322 to the processor to end the data processing (S712).

Further, when it is judged in step S706 that the first buffer memory 1301 underflows, the first memory control circuit 1304 outputs a data transfer request signal 1321 and a data processing command completion signal 1322 to the processor to end the data processing (S711). Then, the processes from step S701 onward are carried out again.

Hereinafter, a conventional variable-length coding method will be described.

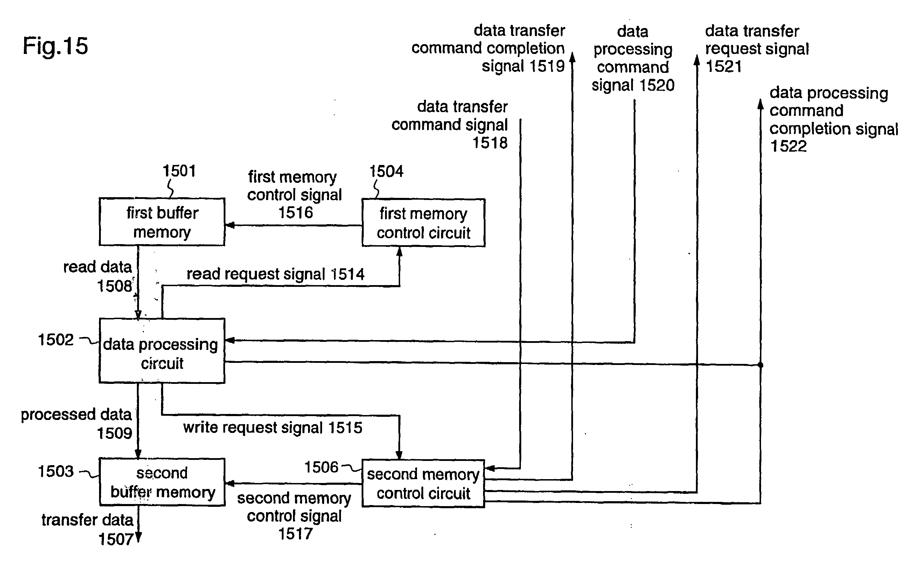

Figure 15 is a block diagram illustrating the construction of a conventional data processing apparatus. In figure 15, reference numeral 1501 denotes a first buffer memory in which read data 1508 is stored. Reference numeral 1502 denotes a data processing circuit which performs variable-length coding on the read data 1508 which is read from the first buffer memory 1501. Reference numeral 1503 denotes a second buffer memory in which processed data 1509 that is processed in the data processing circuit 1502 is stored. Reference numeral 1504 denotes a first memory control circuit which outputs, to the first buffer memory 1501, a first memory control signal 1516 for reading the read data 1508 stored in the first buffer memory 1501 to the data processing circuit 1502. Reference numeral 1506 denotes a second memory control circuit which outputs, to the second buffer memory 1503, a memory control signal 1517 for writing the processed data 1509 into the second buffer memory 1503, or outputting the processed data (transfer data) 1507 written in the second buffer memory 1503. Further, the second memory control circuit judges whether the second buffer memory 1503 overflows or not, before ending the data processing.

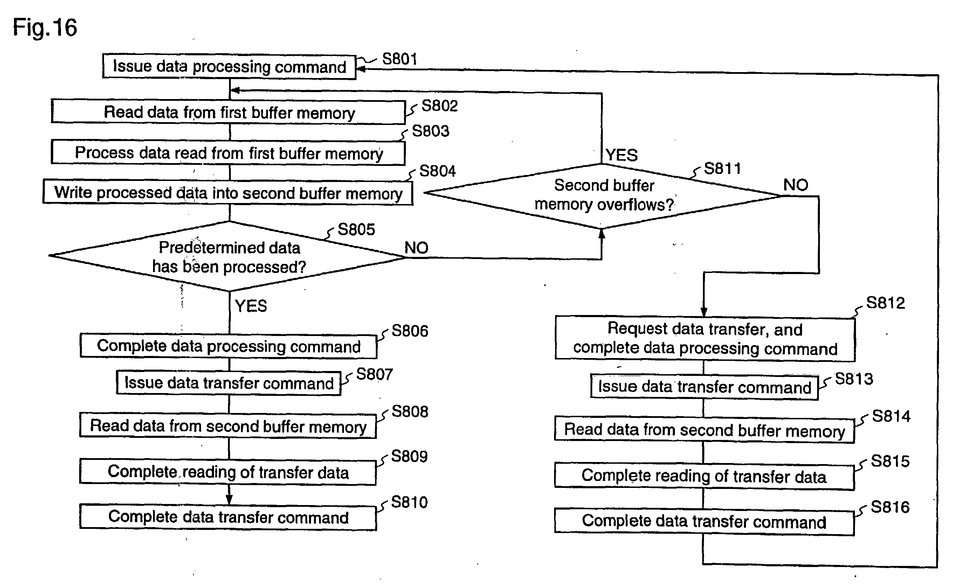

Hereinafter, a data processing method of the data processing apparatus constructed as described above will be described with reference to figure 16.

Initially, a command issuing source, e.g., a processor, issues a data processing command for processing the read data 1508 stored in the first buffer memory 1501, as a data processing command signal 1520, to the data processing circuit 1502 (S801).

On receipt of the data processing command signal 1520, the data processing circuit 1502 outputs a read request signal 1514 to the first memory control circuit 1504, and the first memory control circuit 1504 outputs a first memory control signal 1516 for reading the read data 1508 stored in the first buffer memory 1501, to the first buffer memory 1501. Thereby, the read data 1508 is read from the first buffer memory 1501 to the data processing circuit 1502 (S802).

Then, the data processing circuit 1502 performs data processing on the read data 1508 (S803), and outputs a write request signal 1515 to the second memory control circuit 1506. The second memory control circuit 1506 outputs a second memory control signal 1517 for writing the processed data 1509, to the second buffer memory 1503. Thereby, the processed data 1509 is written in the second buffer memory 1503 (S804).

Next, the data processing circuit 1502 judges whether predetermined data (one block of image data comprising 64 pieces of data, one macroblock of image data corresponding to 64×6 pieces of data, or the like) have been processed or not (S805).

When it is judged in step S805 that the predetermined data have been processed, the data processing circuit 1502 outputs a data processing command completion signal 1522 to the processor to end the data processing (S806). Thereafter, the processor issues a data transfer command signal 1518 to the second memory control circuit 1506 (S807).

On receipt of the data transfer command signal 1518, the second memory control circuit 1506 outputs, to the second buffer memory 1503, a second memory control signal 1517 for reading the transfer data 1507 from the second buffer memory 1503. Thereby, the transfer data 1507 is read from the second buffer memory 1503 (S808).

When reading of the transfer data 507 is completed (S809), the second memory control circuit 1506 outputs a data transfer command completion signal 1519 to the processor to end the data transfer (S810).

Further, when it is judged in step S805 that the predetermined data have not yet been processed, the data processing circuit 1502 outputs a write request signal 1515 to the second memory control circuit 1506, and the second memory control circuit 1508 judges whether the second buffer memory 1503 overflows or not (S811).

When it is judged in step S811 that the second buffer memory 1503 does not overflow, the processes in steps S802∼805 are repeated.

When it is judged in step S811 that the second buffer memory 1503 overflows, the second memory control circuit 1506 outputs a data transfer request signal 1521 and a data processing command completion signal 1522 to the processor to end the data processing (S812). Thereafter, the processor issues a data transfer command signal 1518 to the second memory control circuit 1506 (S813). Then, on receipt of the data transfer command signal 1518, the second memory control circuit 1506 outputs, to the second buffer memory 1503, a second memory control signal 1517 for reading the transfer data 1507 from the second buffer memory 1503. Thereby, the transfer data 1507 is read from the second buffer memory 1503 (S814). When reading of the transfer data 1507 is completed (S815), the second memory control circuit 1506 outputs a data transfer command completion signal 1519 to the processor to end the data transfer (S816). Then, the processes from step S801 onward are carried out again.

In variable-length decoding or variable-length coding, however, the amount of data to be variable-length-decoded or the amount of data to be variable-length-coded is not known unless data processing is actually carried out. So, in the flow of the conventional data processing, a command is issued every time overflow or underflow occurs, until a predetermined amount of data is processed, resulting in an increase in the number of commands issued. Further, there is supply of a clock regardless of whether data transfer is being carried out or not, or whether data processing is being carried out or not, resulting in an increase in power consumption.

The present invention is made to solve the above-described problems and has for its object to provide a data processing apparatus and a data processing method, which can reduce the number of commands to be issued, and reduce power consumption.

### DISCLOSURE OF THE INVENTION

According to the present invention (Claim 1), there is provided a data processing apparatus which performs data transfer for writing transfer data into a first buffer memory according to a command outputted from a command issuing source, processes the transfer data read from the first buffer memory, with a data processing circuit, and writes the processed data into a second buffer memory, and this apparatus includes a clock supply circuit for performing supply of a first clock to a first data write circuit which writes the transfer data into the first buffer memory, and supply of a second clock to a data read circuit which reads the transfer data from the first buffer memory, the data processing circuit, and a second data write circuit which writes the processed data into the second buffer memory.

Therefore, a clock can be supplied to only parts that are needed for each processing, whereby power consumption can be reduced.

According to the present invention (Claim 2), in the data processing apparatus defined in Claim 1, the first data write circuit includes a data transfer completion notification means for notifying the command issuing source and the clock supply circuit of the completion of the data transfer, when writing of the transfer data is completed; when a data transfer command is issued from the command issuing source, the clock supply circuit performs supply of the first clock to start the data transfer; and when the completion of the data transfer is notified by the data transfer completion notification means, the clock supply circuit stops the supply of the first clock.

Therefore, supply of a clock can be stopped when data transfer is not carried out, whereby power consumption can be reduced when data transfer is not carried out.

According to the present invention (Claim 3), in the data processing apparatus defined in Claim 1, the data processing circuit includes a data processing completion notification means for notifying the command issuing source and the clock supply circuit of the completion of the data processing when the data processing is completed; when a data processing command is issued from the command issuing source, the clock supply circuit performs supply of the second clock to start the data processing; and when the completion of the data processing is notified by the data processing completion notification means, the clock supply circuit stops the supply of the second clock.

Therefore, supply of a clock can be stopped when data processing is not carried out, whereby power consumption can be reduced when data processing is not carried out.

According to the present invention (Claim 4), in the data processing apparatus defined in Claim 1, the first data write circuit includes a data transfer completion notification means for notifying the command issuing source and the clock supply circuit of the completion of the data transfer, when writing of the transfer data is completed; the data processing circuit includes a data processing completion notification means for notifying the command issuing source and the clock supply circuit of the completion of the data processing, when the data processing is completed; when a data transfer command is issued from the command issuing source, the clock supply circuit performs the supply of the first clock to start the data transfer; when the completion of the data transfer is notified by the data transfer completion notification means, the clock supply circuit stops the supply of the first clock to end the data transfer, and performs the supply of the second clock to start the data processing; and when the completion of the data processing is notified by the data processing completion notification means, the clock supply circuit stops the supply of the second clock.

Therefore, power consumption can be reduced when data transfer is not carried out and when data processing is not carried out. Further, even when a data processing command is not issued as conventional, data processing can be started at the completion of data transfer. As a result, the number of commands to be issued by the command issuing source can be reduced.

According to the present invention (Claim 5), in the data processing apparatus defined in Claim 1, the data read circuit includes a judgement means for judging whether the first buffer memory underflows or not, before performing the data processing, and a data transfer request means which outputs a data transfer request signal for making a data transfer request to the command issuing source, when it is judged by the judgement means that the first buffer memory underflows.

Therefore, when the first buffer memory underflows, a data transfer request is carried out without terminating a data processing command as conventional, and thereafter, data processing can be started at the completion of the data transfer command, without the necessity for the command issuing source to issue a data processing command again. As a result, the number of commands to be issued by the command issuing source can be reduced.

According to the present invention (Claim 6), in the data processing apparatus defined in Claim 1, the data read circuit includes a judgement means for judging whether the first buffer memory underflows or not, before performing the data processing, and a data transfer request means which outputs a data transfer request signal for making a data transfer request to the command issuing source and the clock supply circuit, when it is judged by the judgement means that the first buffer memory underflows; and the clock supply circuit stops the supply of the second clock with an input of the data transfer request signal.

Therefore, when the first buffer memory underflows, a data transfer request is carried out without terminating a data processing command as conventional, and thereafter, data processing can be resumed at the completion of the data transfer command, without the necessity for the command issuing source to issue a data processing command again. As a result, the number of commands to be issued by the command issuing source can be reduced. Further, supply of the second clock is stopped at the data transfer request, and it is not resumed until data transfer is completed. Therefore, even when a time has elapsed before issue of the data transfer command, an increase in power consumption can be avoided.

According to the present invention (Claim 7), in the data processing apparatus defined in Claim 1, the first data write circuit includes a notification means for notifying a free space or a space occupied by data in the first buffer memory, when the data processing is completed.

Therefore, the number of transfer data at a next data transfer command can be estimated. As a result, maximum data transfer to the first buffer memory can be carried out, whereby the number of times overflow of data occurs can be reduced.

According to the present invention (Claim 8), there is provided a data processing apparatus which reads data stored in a first buffer memory according to a command outputted from a command issuing source to perform data processing with a data processing circuit, writes the processed data into a second buffer memory, and reads the processed data that is written in the second buffer memory to perform data transfer, and this apparatus includes a clock supply circuit for performing supply of a first clock to a first data read circuit which reads the data stored in the first buffer memory to the data processing circuit, the data processing circuit, and a data write circuit which writes the processed data into the second buffer memory, and supply of a second clock to a second data read circuit which reads the processed data that is stored in the second buffer memory and transfers the data.

Therefore, a clock can be supplied to only parts that are needed for each processing, whereby power consumption can be reduced.

According to the present invention (Claim 9), in the data processing apparatus defined in Claim 8, the data processing circuit includes a data processing completion notification means for notifying the command issuing source and the clock supply circuit of the completion of the data processing when the data processing is completed; when a data processing command is issued from the command issuing source, the clock supply circuit performs supply of the first clock to start the data processing; and when the completion of the data processing is notified by the data processing completion notification means, the clock supply circuit stops the supply of the first clock.

Therefore, supply of a clock can be stopped when data processing is not carried out, whereby power consumption can be reduced when data processing is not carried out.

According to the present invention (Claim 10), in the data processing apparatus defined in Claim 8, the second data read circuit includes a data transfer completion notification means for notifying the command issuing source and the clock supply circuit of the completion of the data transfer when reading of the transfer data is completed; when a data transfer command is issued from the command issuing source, the clock supply circuit performs supply of the second clock to start the data transfer; and when the completion of the data transfer is notified by the data transfer completion notification means, the clock supply circuit stops the supply of the second clock.

Therefore, supply of a clock can be stopped when data supply is not carried out, whereby power consumption can be reduced when data supply is not carried out.

According to the present invention (Claim 11), in the data processing apparatus defined in Claim 8, the data processing circuit includes a data processing completion notification means for notifying the command issuing source and the clock supply circuit of the completion of the data processing when the data processing is completed; the second data read circuit includes a data transfer completion notification means for notifying the command issuing source and the clock supply circuit of the completion of the data transfer when reading of the transfer data is completed; when a data processing command is issued from the command issuing source, the clock supply circuit performs supply of the first clock to start the data processing; when the completion of the data processing command is notified by the data processing completion notification means, the clock supply circuit stops the supply of the first clock to end the data processing, and performs the supply of the second clock to start the data transfer; and when the completion of the data transfer is notified by the data transfer completion notification means, the clock supply circuit stops the supply of the second clock.

Therefore, power consumption can be reduced when data transfer is not carried out and when data processing is not carried out. Further, even when a data transfer command is not issued as conventional, data transfer can be started at the completion of data processing. As a result, the number of commands to be issued by the command issuing source can be reduced.

According to the present invention (Claim 12), in the data processing apparatus defined in Claim 8, the data write circuit includes a judgement means for judging whether the second buffer memory overflows or not, before performing the data transfer, and a data transfer request means for outputting a data transfer request signal for making a data transfer request to the command issuing source, when it is judged by the judgement means that the second buffer memory overflows.

Therefore, when the second buffer memory overflows, a data transfer request is carried out without terminating a data processing command as conventional, and data processing can be started at the completion of the data transfer command. As a result, the number of commands to be issued by the command issuing source can be reduced.

According to the present invention (Claim 13), in the data processing apparatus defined in Claim 8, the data write circuit includes a judgement means for judging whether the second buffer memory overflows or not, before performing the data transfer, and a data transfer request means for outputting a data transfer request signal for making a data transfer request to the command issuing source and the clock supply circuit, when it is judged by the judgement means that the second buffer memory overflows; and the clock supply circuit stops the supply of the first clock with an input of the data transfer request signal.

Therefore, when the second buffer memory overflows, a data transfer request is carried out without terminating a data processing command as conventional, and data processing can be resumed at the completion of the data transfer command. As a result, the number of commands to be issued by the command issuing source can be reduced. Further, supply of the first clock is stopped at the data transfer request, and it is not resumed until data transfer is completed. Therefore, even when a time has elapsed before issue of the data transfer command, an increase in power consumption can be avoided.

According to the present invention (Claim 14), in the data processing apparatus defined in Claim 8, the second data read circuit includes a notification means for notifying a free space or a space occupied by data in the second buffer memory, when the data processing is completed.

Therefore, the number of transfer data at a next data transfer command can be estimated. As a result, maximum data transfer to the second buffer memory can be carried out, whereby the number of times overflow of data occurs can be reduced.

According to the present invention (Claim 15), there is provided a data processing method of performing data transfer for writing transfer data into a first buffer memory according to a command outputted from a command issuing source, processing the transfer data read from the first buffer memory, with a data processing circuit, and writing the processed data into a second buffer memory, and this method includes performing supply of a first clock to a first data write circuit which writes the transfer data into the first buffer memory, and supply of a second clock to a data read circuit which reads the transfer data from the first buffer memory, the data processing circuit which processes the transfer data, and a second data write circuit which writes the processed data into the second buffer memory.

Therefore, a clock can be supplied to only parts that are needed for each processing, whereby power consumption can be reduced.

According to the present invention (Claim 16), in the data processing method defined in Claim 15, when a data transfer command is issued from the command issuing source, supply of the first clock is carried out to start the data transfer; and when writing of the transfer data is completed, the completion of the data transfer is notified to stop the supply of the first clock.

Therefore, supply of a clock can be stopped when data transfer is not carried out, whereby power consumption can be reduced when data transfer is not carried out.

According to the present invention (Claim 17), in the data processing method defined in Claim 15, when a data processing command is issued from the command issuing source, supply of the second clock is carried out to start the data processing; and when the data processing is completed, the completion of the data processing is notified to stop the supply of the second clock.

Therefore, supply of a clock can be stopped when data processing is not carried out, whereby power consumption can be reduced when data processing is not carried out.

According to the present invention (Claim 18), in the data processing method defined in Claim 15, when a data transfer command is issued from the command issuing source, supply of the first clock is carried out to start the data transfer; when writing of the transfer data is completed, the completion of the data transfer is notified; when the completion of the data transfer is notified, the supply of the first clock is stopped to end the data transfer, and supply of the second clock is carried out to start the data processing; and when the data processing is completed, the completion of the data processing is notified to stop the supply of the second clock.

Therefore, power consumption can be reduced when data transfer is not carried out and when data processing is not carried out. Further, even when a data processing command is not issued as conventional, data processing can be started at the completion of data transfer. As a result, the number of commands to be issued by the command issuing source can be reduced.

According to the present invention (Claim 19), in the data processing method defined in Claim 15, before performing the data processing, it is judged whether the first buffer memory underflows or not; and when it is judged that the first buffer memory underflows, a data transfer request is carried out.

Therefore, when the first buffer memory underflows, a data transfer request is carried out without terminating a data processing command as conventional, and thereafter, data processing can be started at the completion of the data transfer command, without the necessity for the command issuing source to issue a data processing command again. As a result, the number of commands to be issued by the command issuing source can be reduced.

According to the present invention (Claim 20), in the data processing method defined in Claim 15, before performing the data processing, it is judged whether the first buffer memory underflows or not; and when it is judged that the first buffer memory underflows, the supply of the second clock is stopped, and a data transfer request is carried out.

Therefore, when the first buffer memory underflows, a data transfer request is carried out without terminating a data processing command as conventional, and thereafter, data processing can be resumed at the completion of the data transfer command, without the necessity for the command issuing source to issue a data processing command again. As a result, the number of commands to be issued by the command issuing source can be reduced. Further, supply of the second clock is stopped at the data transfer request, and it is not resumed until data transfer is completed. Therefore, even when a time has elapsed before issue of the data transfer command, an increase in power consumption can be avoided.

According to the present invention (Claim 21), in'the data processing method defined in Claim 15, when the data processing is completed, a free space or a space occupied by data in the first buffer memory is notified.

Therefore, the number of transfer data at a next data transfer command can be estimated. As a result, maximum data transfer to the first buffer memory can be carried out, whereby the number of times underflow of data occurs can be reduced.

According to the present invention (Claim 22), there is provided a data processing method of reading data stored in a first buffer memory to perform data processing with a data processing circuit, writing the processed data into a second buffer memory, and reading the processed data that is written in the second buffer memory to perform data transfer, and this method includes performing supply of a first clock to a first data read circuit which reads the data stored in the first buffer memory to the data processing circuit, the data processing circuit which processes the data, and a data write circuit which writes the processed data into the second buffer memory, and supply of a second clock to a second data read circuit which reads the processed data that is stored in the second buffer memory and transfers the data.

Therefore, a clock can be supplied to only parts that are needed for each processing, whereby power consumption can be reduced

According to the present invention (Claim 23), in the data processing method defined in Claim 22, when a data processing command is issued from the command issuing source, supply of the first clock is carried out to start the data processing; and when the data processing is completed, the completion of the data processing is notified to stop the supply of the first clock.

Therefore, supply of a clock can be stopped when data processing is not carried out, whereby power consumption can be reduced when data processing is not carried out.

According to the present invention (Claim 24), in the data processing method defined in Claim 22, when a data transfer command is issued from the command issuing source, supply of the second clock is carried out to start the data transfer; and when reading of the transfer data is completed, the completion of the data transfer is notified to stop the supply of the second clock.

Therefore, supply of a clock can be stopped when data transfer is not carried out, whereby power consumption can be reduced when data transfer is not carried out.

According to the present invention (Claim 25), in the data processing method defined in Claim 22, when a data processing command is issued from the command issuing source, supply of the first clock is carried out to start the data processing; when the data processing is completed, the completion of the data processing is notified to stop the supply of the first clock, thereby ending the data processing, and supply of the second clock is carried out to start the data transfer; and when reading of the transfer data is completed, the completion of the data transfer is notified to stop the supply of the second clock.

Therefore, power consumption can be reduced when data transfer is not carried out and when data processing is not carried out. Further, even when a data transfer command is not issued as conventional, data transfer can be started at the completion of data processing. As a result, the number of commands to be issued by the command issuing source can be reduced.

According to the present invention (Claim 26), in the data processing method defined in Claim 22, before performing the data transfer, it is judged whether the second buffer memory overflows or not; and when it is judged that the second buffer memory overflows, a data transfer request is carried out.

Therefore, when the second buffer memory overflows, a data transfer request is carried out without terminating a data processing command as conventional, and data processing can be started at the completion of the data transfer command. As a result, the number of commands to be issued by the command issuing source can be reduced.

According to the present invention (Claim 27), in the data processing method defined in Claim 22, before performing the data transfer, it is judged whether the second buffer memory overflows or not; and when it is judged that the second buffer memory overflows, the supply of the first clock is stopped, and a data transfer request is carried out.

Therefore, when the second buffer memory overflows, a data transfer request is carried out without terminating a data processing command as conventional, and data processing can be resumed at the completion of the data transfer command. As a result, the number of commands to be issued by the command issuing source can be reduced. Further, supply of the first clock is stopped at the data transfer request, and it is not resumed until data transfer is completed. Therefore, even when a time has elapsed before issue of the data transfer command, an increase in power consumption can be avoided.

According to the present invention (Claim 28), in the data processing method defined in Claim 22, when the data transfer is completed, a free space or a space occupied by data in the second buffer memory is notified.

Therefore, the number of transfer data at a next data transfer command can be estimated. As a result, maximum data transfer to the second buffer memory can be carried out, whereby the number of times overflow of data occurs can be reduced.

### BRIEF DESCRIPTION OF THE DRAWINGS

Figure 1 is a block diagram of a data processing apparatus according to a first embodiment of the present invention.
Figure 2 is a flowchart of a data processing method according to the first embodiment of the present invention.
Figure 3 is a block diagram of a data processing apparatus according to a second embodiment of the present invention.
Figure 4 is a flowchart of a data processing method according to the second embodiment of the present invention.
Figure 5 is a block diagram of a data processing apparatus according to a third embodiment of the present invention.
Figure 6 is a flowchart of a data processing method according to the third embodiment of the present invention.
Figure 7 is a block diagram of a data processing apparatus according to a fourth embodiment of the present invention.
Figure 8 is a flowchart of a data processing method according to the fourth embodiment of the present invention.
Figure 9 is a block diagram of a data processing apparatus according to a fifth embodiment of the present invention.
Figure 10 is a flowchart of a data processing method according to the fifth embodiment of the present invention.
Figure 11 is a block diagram of a data processing apparatus according to a sixth embodiment of the present invention.
Figure 12 is a flowchart of a data processing method according to the sixth embodiment of the present invention.
Figure 13 is a block diagram of a conventional data processing apparatus.
Figure 14 is a flowchart of a variable-length decoding method by the conventional data processing apparatus.
Figure 15 is a block diagram of a conventional data processing apparatus.
Figure 16 is a flowchart of a variable-length coding method by the conventional data processing apparatus.

### BEST MODE TO EXECUTE THE INVENTION

Hereinafter, embodiments of the present invention will be described with reference to the drawings. The embodiments described below are merely examples, and the present invention is not necessarily restricted thereto.

### Embodiment 1.

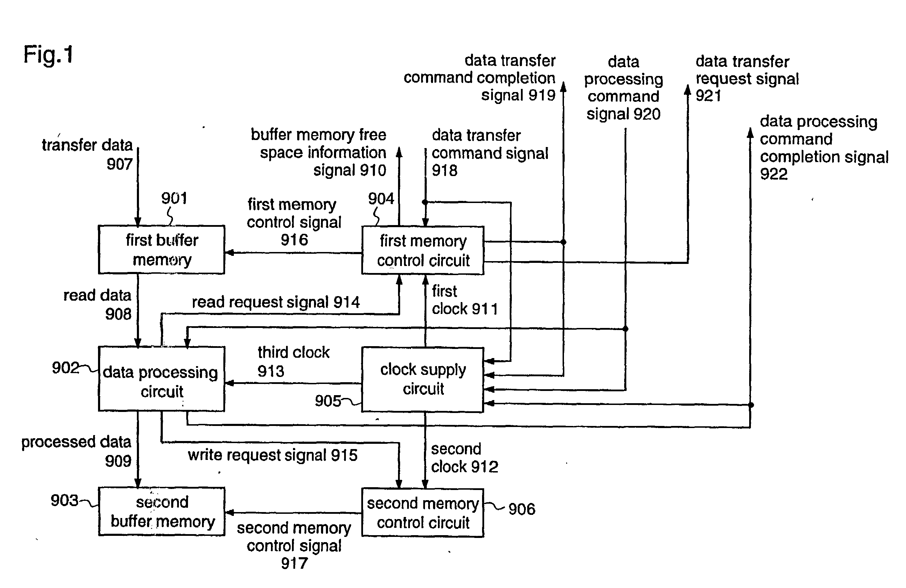

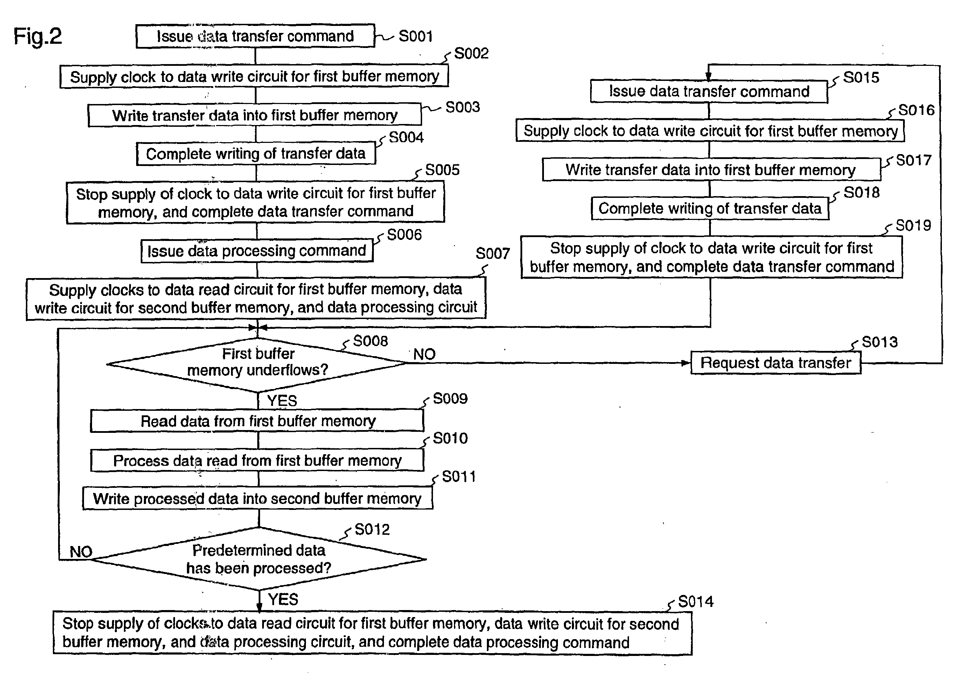

Hereinafter, a data processing apparatus according to a first embodiment of the invention will be described with reference to figures 1 and 2.

Figure 1 is a block diagram illustrating the construction of a data processing apparatus according to the first embodiment.

In figure 1, reference numeral 901 denotes a first buffer memory in which transfer data 907 is stored. Reference numeral 902 denotes a data processing circuit which performs data processing (variable-length decoding) on read data 908 that is read from the first buffer memory 901. The data processing circuit 902 is operated with an input of a third clock 913. Reference numeral 903 denotes a second buffer memory in which processed data 909 that is processed in the data processing circuit 902 is stored. Reference numeral 904 denotes a first memory control circuit which outputs, to the first buffer memory 901, a first memory control signal 916 for writing the transfer data 907 into the first buffer memory 901, or reading the transfer data (read data) 908 that is written in the first buffer memory 901, to the data processing circuit 902. Further, the first memory control circuit 904 judges whether the first buffer memory 901 underflows or not, before performing data processing. The first memory control circuit 904 is operated with an input of a first clock 911. Reference numeral 905 denotes a clock supply circuit which supplies a first clock 911, a second clock 912, and a third clock 913 to the first memory control circuit 904, the second memory control circuit 906, and the data processing circuit 902, respectively. Reference numeral 906 denotes a second memory control circuit which outputs, to the second buffer memory 903, a second memory control signal 917 for writing the processed data 909 that is processed in the data processing circuit 902 into the second buffer memory 903. The second memory control circuit 906 is operated with an input of a second clock 912.

Hereinafter, a data processing method of the data processing apparatus constructed as described above will be described with reference to figure 2.

Initially, a command issuing source, e.g., a processor, issues a data transfer command for writing the transfer data 907 into the first buffer memory 901, as a data transfer command signal 918, to the first memory control circuit 904 and the clock supply circuit 905 (S001).

The clock supply circuit 905 supplies a clock to a data write circuit for the first buffer memory 901 (S002). To be specific, it supplies a first clock 911 to the first memory control circuit 904 to operate the first memory control circuit 904. Then, the first memory control circuit 904 outputs a first memory control signal 916 for writing the transfer data 907, to the first buffer memory 901 (S003).

When writing of the transfer data 907 is completed (S004), the first memory control circuit 904 outputs a data transfer command completion signal 919 to the clock supply circuit 905 to stop the supply of the first clock 911 to the data write circuit for the first buffer memory 901, i.e., to the first memory control circuit 904, and further, the first memory control circuit 904 outputs the data transfer command completion signal 919 to the processor, thereby ending the data transfer (S005).

Next, the processor issues a data processing command signal 920 to the clock supply circuit 905 and the data processing circuit 902 (S006).

On receipt of the data processing command signal 920, the clock supply circuit 905 performs supply of clocks to the data read circuit for the first buffer memory 901, the data write circuit for the second buffer memory 903, and the data processing circuit 902 (S007). That is, the clock supply circuit 905 supplies a first clock 911, a second clock 912, and a third clock 913 to the first memory control circuit 904, the second memory control circuit 906, and the data processing circuit 902, respectively.

On receipt of the data processing command signal 920, the data processing circuit 902 outputs a read request signal 914 to the first memory control circuit 904, and the first memory control circuit 904 judges whether the first buffer memory 901 underflows or not (S008).

When it is judged in step S008 that the first buffer memory 901 does not underflow, the first memory control circuit 904 outputs a first memory control signal 916 for reading the read data 908 stored in the first buffer memory 901, to the first buffer memory 901, and reads the read data 908 stored in the first buffer memory 901 to the data processing circuit 902 (S009). Then, the first data processing circuit 902 performs data processing on the read data 908 (S010). Thereafter, the data processing circuit 902 outputs a write request signal 915 to the second memory control circuit 906. Then, the second memory control circuit 906 outputs a second memory control signal 917 for writing the processed data 909, to the second buffer memory 903. Thereby, the processed data 909 is written into the second buffer memory 903 (S011).

Next, the data processing circuit 902 judges whether predetermined data (one block of image data comprising 64 pieces of data, one macroblock of image data comprising 64×6 pieces of data, or the like) have been processed or not (S012).

When it is judged that the predetermined data have not yet been processed, the processes in steps S008∼S012 are repeated until processing of the predetermined data is completed. When it is judged that the predetermined data have been processed, the data processing circuit 902 outputs a data processing command completion signal 922 to the clock supply circuit 905 to stop supply of the clocks to the data read circuit for the first buffer memory 901, the data write circuit for the second buffer memory 903, and the data processing circuit 902, and further, the data processing circuit 902 outputs the data processing command completion signal 922 to the processor to end the data processing, whereby a series of processes is completed (S014).

When it is judged in step S008 that the first buffer memory 901 underflows, the first memory control circuit 904 outputs a data transfer request signal 921 to the processor (S013). Then, the processor reissues a data transfer command for writing the transfer data 907 into the first buffer memory 901, as a data transfer command signal 918, to the first memory control circuit 904 and the clock supply circuit 905 (S015). The clock supply circuit 905 supplies a clock to the data write circuit for the first buffer memory 901 (S016). That is, it supplies a first clock 911 to the first memory control circuit 904 to operate the first memory control circuit 904. Then, the first memory control circuit 904 outputs a first memory control signal 916 for writing the transfer data 907, to the first buffer memory 901. Thereby, the transfer data 907 is written into the first buffer memory 901 (S017). When writing of the transfer data 907 is completed (S018), the first memory control circuit 904 outputs a data transfer command completion signal 919 to the clock supply circuit 905 to stop supply of the first clock 911 to the data write circuit for the first buffer memory 901, i.e., to the first memory control circuit 904, and further, the first memory control circuit 904 outputs the data transfer command completion signal 919 to the processor to end the data transfer (S019). Thereafter, the processes from step S008 onward are repeated.

As described above, since the data processing apparatus according to the first embodiment is provided with the clock supply circuit 905 which performs supply of clocks according to commands issued from the command source, supply of clocks can be stopped when data transfer is not carried out and when data processing is not carried out, whereby power consumption can be reduced. Further, when the first buffer memory 901 underflows, a data transfer request is carried out without terminating a data processing command as conventional, and data processing is resumed at the completion of a data transfer command. Therefore, when the first buffer memory 901 underflows, it is not necessary for the command issuing source to issue a data processing command again, whereby the number of commands to be issued can be reduced.

When data processing is completed, a buffer memory free space information signal 910 indicating a free space or a space occupied by data in the first buffer memory 901 into which the transfer data 907 is written, may be output, whereby the number of transfer data at a next data transfer command can be estimated. As a result, maximum data transfer to the first buffer memory 901 can be performed, whereby the number of times underflow of data occurs can be reduced.

### Embodiment 2.

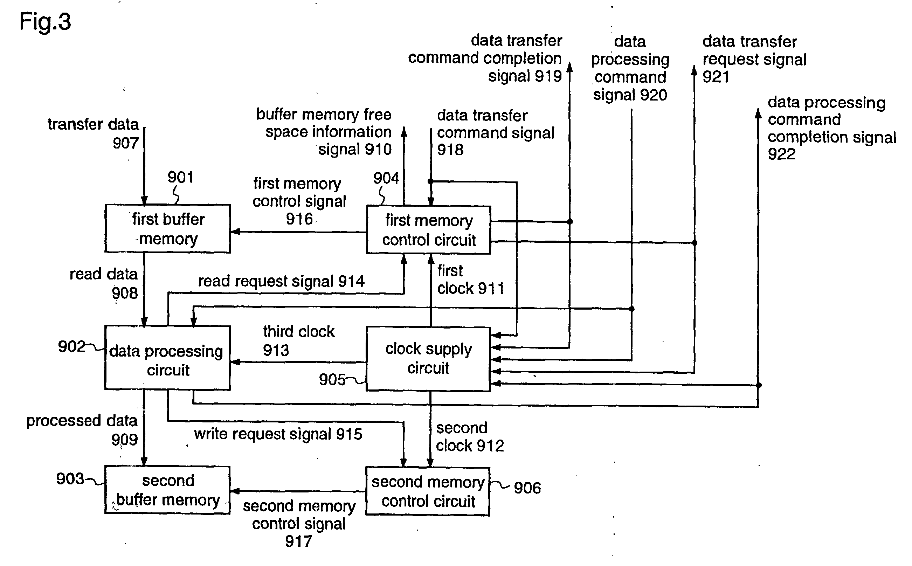

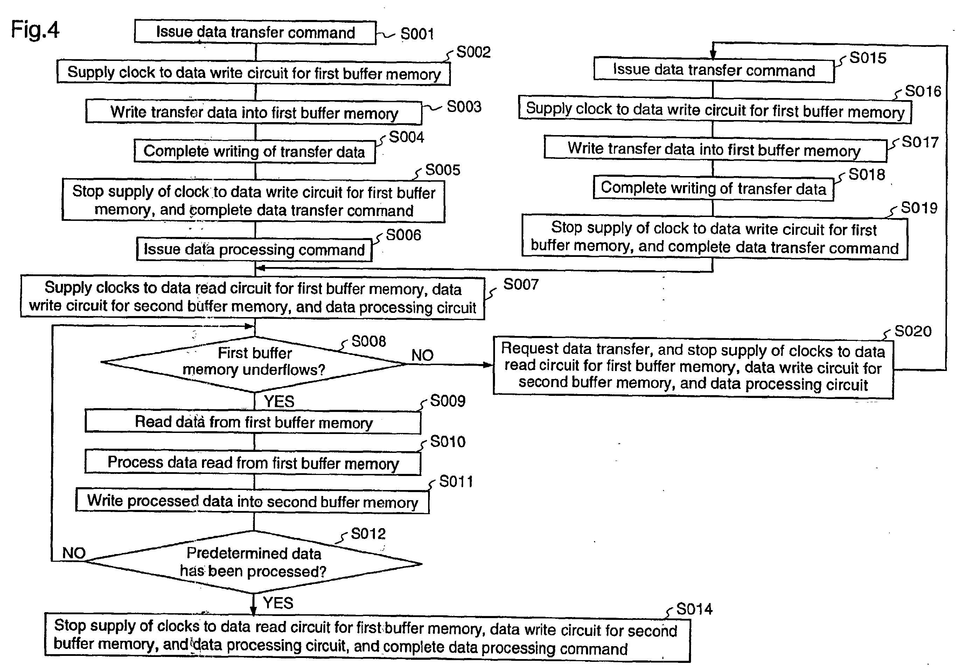

Hereinafter, a data processing apparatus according to a second embodiment will be described with reference to figures 3 and 4.

Figure 3 is a block diagram illustrating a data processing apparatus according to the second embodiment.

In figure 3, the same or corresponding components as/to those shown in figure 1 are assigned with the same reference numerals, and description thereof will be omitted.

This second embodiment is different from the first embodiment in that, when the first buffer memory 901 underflows, a data transfer request is made and supply of clocks to the data read circuit for the first buffer memory 901, the data write circuit for the second buffer memory 903, and the data processing circuit 902 is stopped, and that supply of clocks to the data read circuit for the first buffer memory 901, the data write circuit for the second buffer memory 903, and the data processing circuit 902 is carried out at the completion of a data transfer command that is issued when the first buffer memory 901 underflows.

Hereinafter, a data processing method of the data processing apparatus according to the second embodiment will be described with reference to figure 4.

Initially, a command issuing source, for example, a processor, issues a data transfer command for writing the transfer data 907 into the first buffer memory 901, as a data transfer command signal 918, to the first memory control circuit 904 and the clock supply circuit 905 (S001).

The clock supply circuit 905 supplies a clock to the data write circuit for the first buffer memory 901 (S002). That is, it supplies a first clock 911 to the first memory control circuit 904 to operate the first memory control circuit 904. Then, the first memory control circuit 904 outputs a first memory control signal 916 for writing the transfer data 907, to the first buffer memory 901. Thereby, the transfer data 907 is written in the first buffer memory 901 (S003).

When writing of the transfer data 907 is completed (S004), the first memory control circuit 904 outputs a data transfer command completion signal 919 to the clock supply circuit 905 to stop supply of the first clock 911 to the data write circuit for the first buffer memory 901, i.e., the first memory control circuit 904, and further, the first memory control circuit 904 outputs the data transfer command completion signal 919 to the processor to end the data transfer (S005).

Next, the processor issues a data processing command signal 920 to the clock supply circuit 905 and the data processing circuit 902 (S006).

On receipt of the data processing command signal 920, the clock supply circuit 905 supplies clocks to the data read circuit for the first buffer memory 901, the data write circuit for the second buffer memory 903, and the data processing circuit 902 (S007). That is, the clock supply circuit 905 supplies a first clock 911, a second clock 912, and a third clock 913 to the first memory control circuit 904, the second memory control circuit 906, and the data processing circuit 902, respectively.

On receipt of the data processing command signal 920, the data processing circuit 902 outputs a read request signal 914 to the first memory control circuit 904, and the first memory control circuit 904 judges whether the first buffer memory 901 underflows or not (S008).

When it is judged in step S008 that the first buffer memory 901 does not underflow, the first memory control circuit 904 outputs a first memory control signal 916 for reading the read data 908 stored in the first buffer memory 901, to the first buffer memory 901, and reads the read data 908 stored in the first buffer memory 901 to the data processing circuit 902 (S009). Then, the first data processing circuit 902 performs data processing on the read data 908 (S010). Thereafter, the data processing circuit 902 outputs a write request signal 915 to the second memory control circuit 906. Then, the second memory control circuit 906 outputs a second memory control signal 917 for writing the processed data 909, to the second buffer memory 903. Thereby, the processed data 909 is written into the second buffer memory 903 (S011).

Next, the data processing circuit 902 judges whether predetermined data (one block of image data comprising 64 pieces of data, one macroblock of image data comprising 64×6 pieces of data, or the like) have been processed or not (S012).

When it is judged that the predetermined data have not yet been processed, the processes in steps S008∼S012 are repeated again until processing of the predetermined data is completed. When it is judged that the predetermined data have already been processed, the data processing circuit 902 outputs a data processing command completion signal 922 to the clock supply circuit 905 to halt supply of the clocks to the data read circuit for the first buffer memory 901, the data write circuit for the second buffer memory 903, and the data processing circuit 902, and further, the data processing circuit 902 outputs the data processing command completion signal 922 to the processor to end the data processing, whereby the successive processes are ended (S014).

When it is judged in step S008 that the first buffer memory 901 underflows, the first memory control circuit 904 outputs a data transfer request signal 921 to the processor to make a data transfer request, and outputs the data transfer request signal 921 to the clock supply circuit 905 to stop supply of the clocks to the data read circuit for the first buffer memory 901, the data write circuit for the second buffer memory 902, and the data processing circuit 903 (S020). Then, the processor issues a data transfer command for writing the transfer data 907 into the first buffer memory 901, as a data transfer command signal 918, to the first memory control circuit 904 and the clock supply circuit 905 (S015). The clock supply circuit 905 supplies a clock to the data write circuit for the first buffer memory 901 (S016). That is, the clock supply circuit 905 supplies a first clock 911 to the first memory control circuit 904 to operate the first memory control circuit 904. Then, the first memory control circuit 904 outputs a first memory control signal 916 for writing the transfer data 907, to the first buffer memory 901. Thereby, the transfer data 907 is written into the first buffer memory 901 (S017). When writing of the transfer data 907 is completed (S018), the first memory control circuit 904 outputs a data transfer command completion signal 919 to the clock supply circuit 905 to stop supply of the first clock 911 to the data write circuit for the first buffer memory 901, i.e., the first memory control circuit 904, and further, it outputs the data transfer command completion signal 919 to the processor to end the data transfer (S019). Thereafter, the processes from step S007 onward are carried out again.

As described above, since the data processing apparatus according to the second embodiment is provided with the clock supply circuit 905 which supplies clocks according to commands issued from the command issuing source, supply of clocks can be stopped when data are not transferred and when data are not processed, whereby power consumption can be reduced. Further, when the first buffer memory 901 underflows, a data transfer request is carried out without terminating a data processing command as conventional, and data processing is resumed at the completion of a data transfer command. Therefore, when the first buffer memory 901 underflows, it is not necessary for the command issuing source to issue a data processing command again, whereby the number of commands to be issued can be reduced.

Furthermore, when making the above-mentioned data transfer request, supply of clocks to the data read circuit for the first buffer memory 901, the data write circuit for the second buffer memory 903, and the data processing circuit 902 is stopped, and supply of clocks is not resumed until data transfer is completed. Therefore, even when a time has elapsed before issue of the data transfer command, an increase in power consumption can be avoided.

When completing data processing, a buffer memory free space information signal 910, which indicates a free space or a space occupied by data in the first buffer memory 901 where the transfer data 907 is to be written, may be output, whereby the number of transfer data in the next data transfer command can be estimated. As a result, maximum data transfer to the first buffer memory 901 can be performed, and the number of times underflow of data occurs can be reduced.

### Embodiment 3.

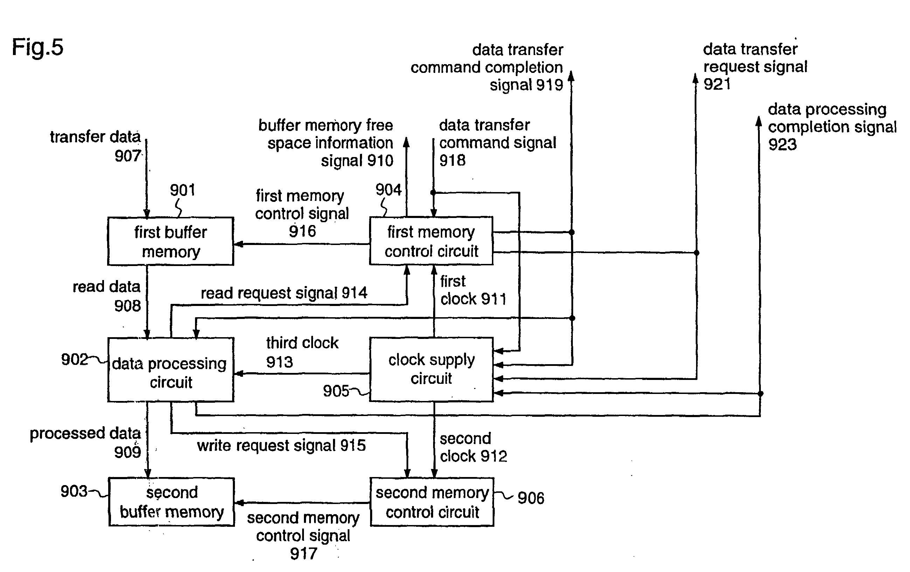

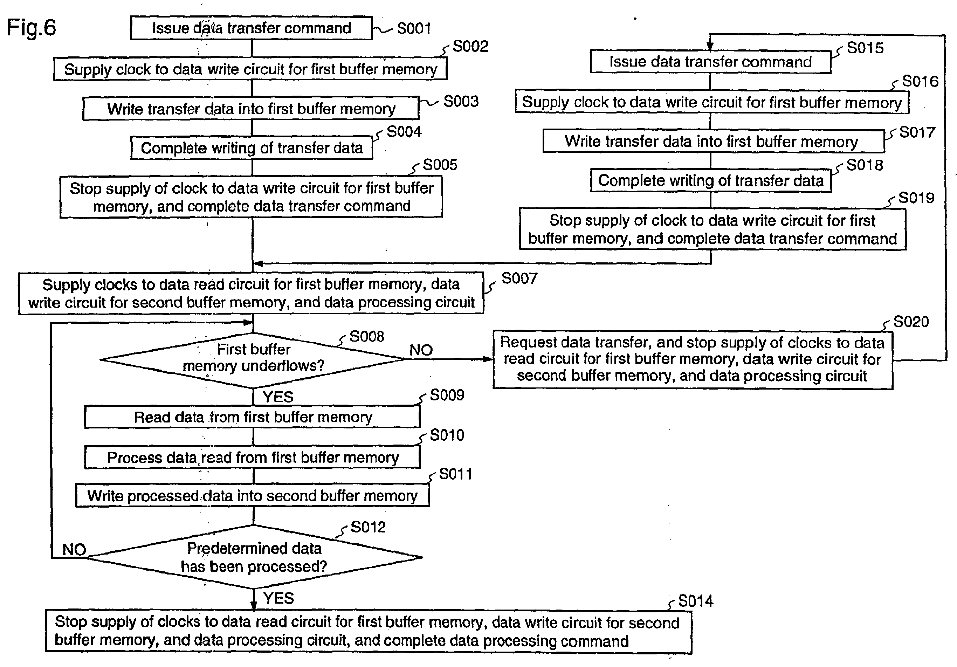

Hereinafter, a data processing apparatus according to a third embodiment of the present invention will be described with reference to figures 5 and 6.

Figure 5 is a block diagram illustrating a data processing apparatus according to the third embodiment. In figure 5, the same or corresponding components as/to those mentioned in figure 3 are assigned with the same reference numerals, and descriptions thereof will be omitted.

This third embodiment is different from the second embodiment in that a data processing command is not issued from a command issuing source, and data processing is started at the completion of data transfer.

Hereinafter, a data processing method of the data processing apparatus according to the third embodiment will be described with reference to figure 6.

Initially, a command issuing source, for example, a processor, issues a data transfer command for writing the transfer data 907 into the first buffer memory 901, as a data transfer command signal 918, to the first memory control circuit 904 and the clock supply circuit 905 (S001).

The clock supply circuit 905 supplies a clock to the data write circuit for the first buffer memory 901 (S002). That is, it supplies a first clock 911 to the first memory control circuit 904 to operate the first memory control circuit 904. Then, the first memory control circuit 904 outputs a first memory control signal 916 for writing the transfer data 907, to the first buffer memory 901. Thereby, the transfer data 907 is written into the first buffer memory 901 (S003).

When writing of the transfer data 907 is completed (S004), the first memory control circuit 904 outputs a data transfer command completion signal 919 to the clock supply circuit 905, the processor, and the data processing circuit 902.

On receipt of the data transfer command completion signal 919, the clock supply circuit 905 stops supply of the first clock 911 to the data write circuit of the first buffer memory 901, i.e., the first memory control circuit 904. On receipt of the data transfer command completion signal 919, the processor completes issue of the data transfer commend, whereby data transfer is ended (S005).

Further, on receipt of the data transfer command completion signal 919, the clock supply circuit 905 supplies clocks to the data read circuit for the first buffer memory 901, the data write circuit for the second buffer memory 903, and the data processing circuit 902 (S007). That is, the clock supply circuit 905 supplies a first clock 911, a second clock 912, and a third clock 913 to the first memory control circuit 904, the second memory control circuit 906, and the data processing circuit 902, respectively.

On receipt of the data processing command signal 919, the data processing circuit 902 outputs a read request signal 914 to the first memory control circuit 904, and the first memory control circuit 904 judges whether the first buffer memory 901 underflows or not (S008).

When it is judged in step S008 that the first buffer memory 901 does not underflow, the first memory control circuit 904 outputs a first memory control signal 916 for reading the read data 908 stored in the first buffer memory 901, to the first buffer memory 901. Thereby, the read data 908 is read from the first buffer memory 901 to the data processing circuit 902 (S009).

Then, the data processing circuit 902 performs data processing on the read data 908 (S010). Thereafter, the data processing circuit 902 outputs a write request signal 915 to the second memory control circuit 906, and the second memory control circuit 906 outputs a second memory control signal 917 for writing the processed data 909, to the second buffer memory 903. Thereby, the processed data 909 is written into the second buffer memory 903 (S011).

Next, the data processing circuit 902 judges whether predetermined data (one block of image data comprising 64 pieces of data, one macroblock of image data comprising 64×6 pieces of data, or the like) have been processed or not (S012).

When it is judged that the predetermined data have not yet been processed, the processes in steps S008∼S012 are repeated again until processing of the predetermined data is completed. When it is judged that the predetermined data have been processed, the data processing circuit 902 outputs a data processing completion signal 923 to the clock supply circuit 905 to stop supply of the clocks to the data read circuit for the first buffer memory 901, the data write circuit for the second buffer memory 903, and the data processing circuit 902, and further, the data processing circuit 902 outputs the data processing completion signal 923 to the processor to complete the data processing, whereby the successive processes are ended (S014).

When it is judged in step 3008 that the first buffer memory 901 underflows, the first memory control circuit 904 outputs a data transfer request signal 921 to the processor to make a data transfer request, and outputs the data transfer request signal 921 to the clock supply circuit 905 to stop supply of the clocks to the data read circuit for the first buffer memory 901, the data write circuit for the second buffer memory 902, and the data processing circuit 903 (S020). Then, the processor issues a data transfer command for writing the transfer data 907 into the first buffer memory 901, as a data transfer command signal 918, to the first memory control circuit 904 and the clock supply circuit 905 (S015). The clock supply circuit 905 supplies a clock to the data write circuit for the first buffer memory 901 (S016). That is, the clock supply circuit 905 supplies a first clock 911 to the first memory control circuit 904 to operate the first memory control circuit 904. Then, the first memory control circuit 904 outputs a first memory control signal 916 for writing the transfer data 907, to the first buffer memory 901. Thereby, the transfer data 907 is written into the first buffer memory 901 (S017). When writing of the transfer data 907 is completed (S018), the first memory control circuit 904 outputs a data transfer command completion signal 919 to the clock supply circuit 905 to stop supply of the first clock 911 to the data write circuit for the first buffer memory 901, i.e., the first memory control circuit 904, and further, it outputs the data transfer command completion signal 919 to the processor to complete the data transfer (S019). Thereafter, the processes from step S007 onward are carried out again.

As described above, since the data processing apparatus according to the third embodiment is provided with the clock supply circuit 905 for supplying clocks according to commands issued from the command issuing source, supply of the clocks can be stopped when data are not transferred and when data are not processed, whereby power consumption can be reduced. Further, since data processing is performed at the completion of data transfer without issuing a data processing command as conventional, the command issuing source can reduce the number of commands to issue.

Further, when the first buffer memory 901 underflows, a data transfer request is made without terminating a data processing command as conventional, and data processing is resumed at the completion of a data transfer command. Therefore, when the first buffer memory 901 underflows, it is not necessary for the command issuing source to issue a data processing command again, whereby the number of commands to be issued can be reduced. Furthermore, when making the above-mentioned data transfer request, supply of clocks to the data read circuit for the first buffer memory 901, the data write circuit for the second buffer memory 903, and the data processing circuit 902 is stopped, and supply of clocks is not resumed until data transfer is completed. Therefore, even when a time has elapsed before issue of the data transfer command, an increase in power consumption can be avoided.

When completing data processing, a buffer memory free space information signal 910, which indicates a free space or a space occupied by data in the first buffer memory 901 in which the transfer data 907 is to be written, may be output, whereby the number of transfer data at the next data transfer command can be estimated. As a result, maximum data transfer to the first buffer memory 901 can be performed, and the number of times underflow of data occurs can be reduced.

### Embodiment 4.

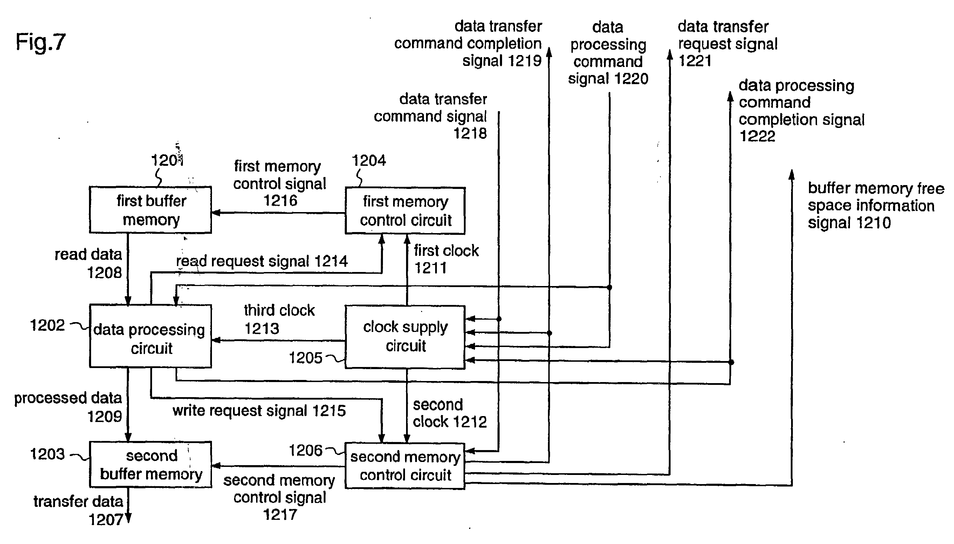

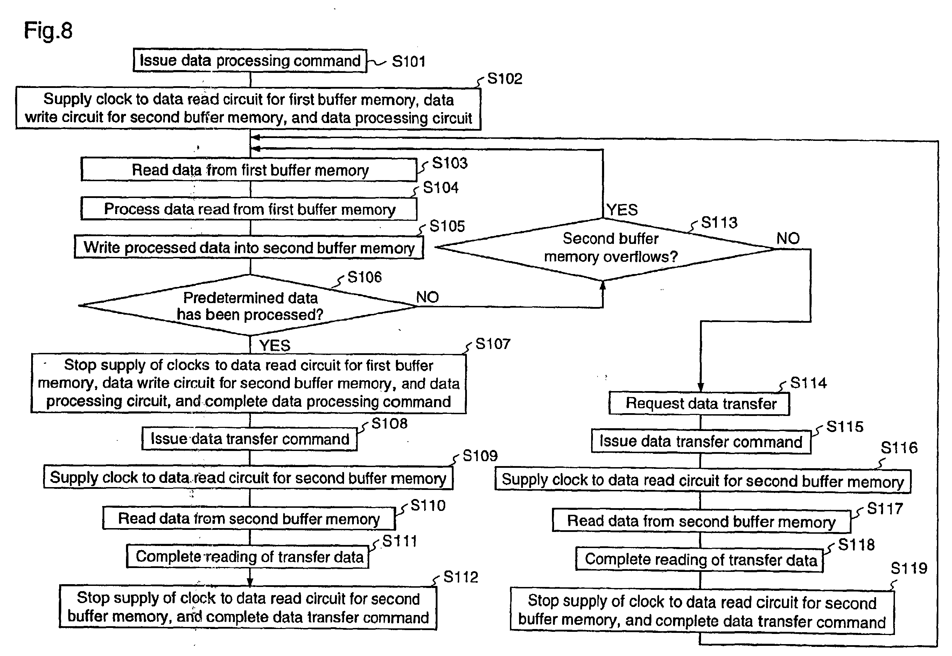

Hereinafter, a data processing apparatus according to a fourth embodiment will be described with reference to figures 7 and 8.

Figure 7 is a block diagram illustrating a data processing apparatus according to the fourth embodiment.

In figure 7, reference numeral 1201 denotes a first buffer memory in which read data 1208 is stored. Reference numeral 1202 denotes a data processing circuit which performs data processing (variable-length decoding) on the read data 1208 that is read from the first buffer memory 1201. The data processing circuit 1202 is operated with an input of a third clock 1213. Reference numeral 1203 denotes a second buffer memory in which processed data 1209 that is processed in the data processing circuit 1202 is stored. Reference numeral 1204 denotes a first memory control circuit which outputs, to the first buffer memory 1201, a first memory control signal 1216 for reading the read data 1208 stored in the first buffer memory 1201 to the data processing circuit 1202. The first memory control circuit 1204 is operated with an input of a first clock 1211. Reference numeral 1205 denotes a clock supply circuit which supplies a first clock 1211, a second clock 1212, and a third clock 1213 to the first memory control circuit 1204, the second memory control circuit 1206, and the data processing circuit 1202, respectively. Reference numeral 1206 denotes a second memory control circuit which outputs, to the second buffer memory 1203, a memory control signal 1217 for writing the processed data 1209 into the second buffer memory 1203, or outputting the processed data (transfer data) 1207 written in the second buffer memory 1203. Further, before data processing is completed, the second memory control circuit 1206 judges whether the second buffer memory 1203 overflows or not. The second memory control circuit 1206 is operated with an input of the second clock 1212.

Hereinafter, a data processing method of the data processing apparatus constructed as described above will be described with reference to figure 8.

Initially, a command issuing source, e.g., a processor, issues a data transfer command for processing the read data 1208 stored in the first buffer memory 1201, as a data processing command signal 1220, to the clock supply circuit 1205 and the data processing circuit 1202 (S101).

On receipt of the data processing command signal 1220, the clock supply circuit 1205 supplies clocks to the data read circuit for the first buffer memory 1201, the data write circuit for the second buffer memory 1203, and the data processing circuit 1202 (S102). That is, the clock supply circuit 1205 supplies a first clock 1211, a second clock 1212, and a third clock 1213 to the first memory control circuit 1204, the second memory control circuit 1206, and the data processing circuit 1202, respectively.

On receipt of the data processing command signal 1220, the data processing circuit 1202 outputs a read request signal 1214 to the first memory control circuit 1204, and the first memory control circuit 1204 outputs a first memory control signal 1216 for reading the read data 1208 stored in the first buffer memory 1201, to the first buffer memory 1201. Thereby, the read data 1208 stored in the first buffer memory 1201 is read to the data processing circuit 1202 (S103).

Then, the data processing circuit 1202 performs data processing on the read data 1208 (S104), and outputs a write request signal 1215 to the second memory control circuit 1206. Then, the second memory control circuit 1206 outputs a second memory control signal 1217 for writing the processed data 1209, to the second buffer memory 1203. Thereby, the processed data 1209 that is processed in the data processing circuit 1202 is written into the second buffer memory 1203 (S105).

Next, the data processing circuit 1202 judges whether predetermined data (one block of image data comprising 64 pieces of data, one macroblock of image data comprising 64×6 pieces of data, or the like) have been processed or not (S106).

When it is judged in step S106 that the predetermined data have been processed, the data processing circuit 1202 outputs a data processing command completion signal 1222 to the clock supply circuit 1205 to stop supply of clocks to the data read circuit for the first buffer memory 1201, the data write circuit of the second buffer memory 1203, and the data processing circuit 1202, and further, it outputs the data processing command completion signal 1222 to the processor. Thereby data processing is ended (S107). Thereafter, the processor issues a data transfer command signal 1218 to the clock supply circuit 1205 and the second memory control circuit 1206 (S108).

On receipt of the data transfer command signal 1218, the clock supply circuit 1205 supplies a second clock 1212 to the data read circuit of the second buffer memory 1203, i.e., the second memory control circuit 1206 (S109). Thereby, the second memory control circuit 1206 is operated.

On receipt of the data transfer command signal 1218, the second memory control circuit 1206 outputs a second memory control signal 1217 for reading the transfer data 1207 from the second buffer memory 1203, to the second buffer memory 1203. Thereby, the transfer data 1207 stored in the second buffer memory 1203 is read (S110).

When reading of the transfer data 1207 is completed (Sill), the second memory control circuit 1206 outputs a data transfer command completion signal 1219 to the clock supply circuit 1205 to stop supply of the second clock 1212 to the data read circuit for the second buffer memory 1203, and outputs the data transfer command completion signal 1219 to the processor to complete data transfer, whereby the successive processes are ended (S112).

When it is judged in step S106 that the predetermined data have not yet been processed, the data processing circuit 1202. outputs a write request signal 1215 to the second memory control circuit 1206. Then, the second memory control circuit 1206 judges whether the second buffer memory 1203 overflows or not (S113).

When it is judged in step S113 that the second buffer memory 1203 does not overflow, the processes in steps S103∼S106 are repeated again.

When it is judged in step S113 that the second buffer memory 1203 overflows, the second memory control circuit 1206 outputs a data transfer request signal 1221 to the processor to make a data transfer request (S114). Thereafter, the processor issues a data transfer command signal 1218 to the clock supply circuit 1205 and the second memory control circuit 1206 (S115). On receipt of the data transfer command signal 1218, the clock supply circuit 1205 supplies a second clock 1212 to the data read circuit for the second buffer memory 1203, i.e., the second memory control circuit 1206 (S116). Thereby, the second memory control circuit 1206 is operated. On receipt of the data transfer command signal 1218, the second memory control circuit 1206 outputs a second memory control signal 1217 for reading the transfer data 1207 from the second buffer memory 1203, to the second buffer memory 1203. Thereby, the transfer data 1207 stored in the second buffer memory 1203 is read (S117). When reading of the transfer data 1207 is completed (S118), the second memory control circuit 1206 outputs a data transfer command completion signal 1219 to the clock supply circuit 1205 to stop supply of the second clock 1212 to the data read circuit for the second buffer memory 1203, and further, it outputs the data transfer command completion signal 1219 to the processor to complete data transfer, whereby the successive processes are ended (S119). The processes from step S103 onward are repeated again.

As described above, since the data processing method according to the fourth embodiment is provided with the clock supply circuit 1205 for supplying clocks according to commands issued from the command issuing source, supply of clocks can be stopped when data are not transferred and when data are not processed, whereby power consumption can be reduced.

Further, when the second buffer memory 1203 overflows, data transfer is carried out without terminating a data processing command as conventional, and thereafter, the rest of data processing is resumed at the completion of data transfer. Therefore, when the second buffer memory 1203 overflows, it is not necessary for the command issuing source to issue a data processing command again, whereby the number of commands to be issued can be reduced.

When completing data processing, a buffer memory free space information signal 1210, which indicates a free space or a space occupied by data in the second buffer memory 1203 where the processed data 1209 is to be written, may be output, whereby the number of transfer data at the next data transfer command can be estimated. As a result, maximum data transfer to the second buffer memory 1203 can be carried out, whereby the number of times overflow of data occurs can be reduced.

### Embodiment 5.

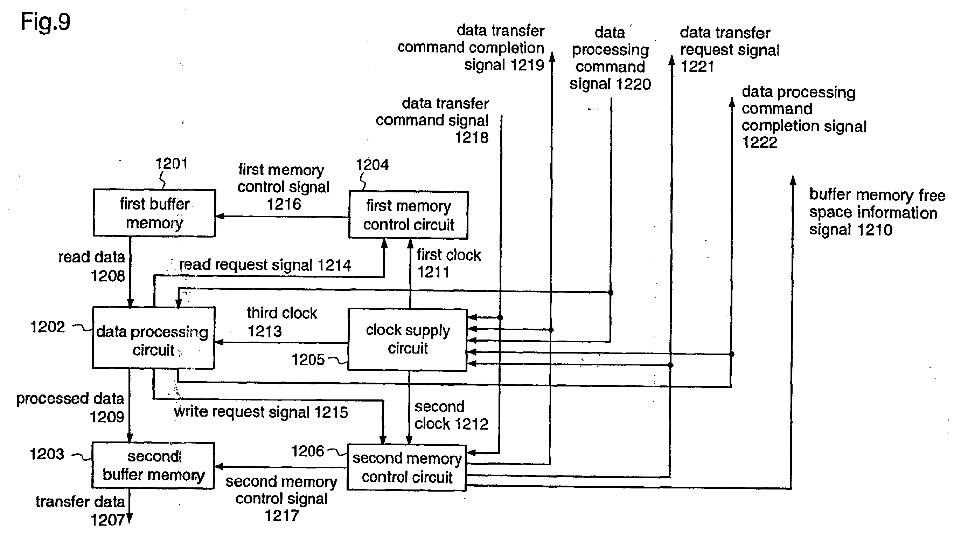

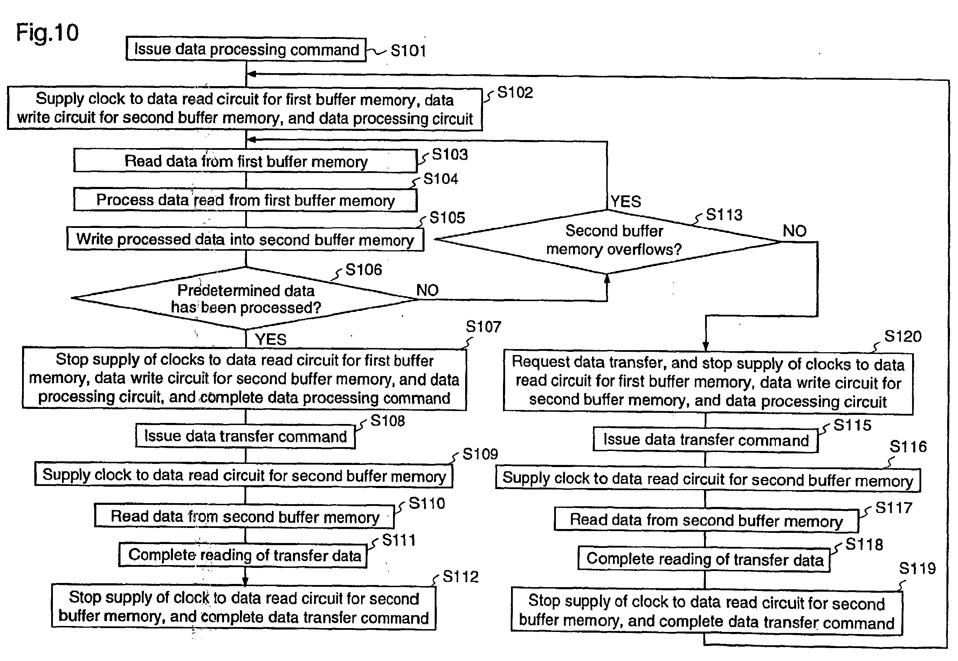

Hereinafter, a data processing apparatus according to a fifth embodiment will be described with reference to figures 9 and 10.

Figure 9 is a block diagram illustrating the construction of a data processing apparatus according to the fifth embodiment. In figure 9, the same or corresponding components as/to those shown in figure 7 are given the same reference numerals, and descriptions thereof will be omitted.

This fifth embodiment is different from the fourth embodiment in that, when the second buffer memory 1203 underflows, data transfer is carried out and supply of clocks to the data read circuit for the first buffer memory 1201, the data write circuit for the second buffer memory 1203, and the data processing circuit 1202 is stopped, and that, when the first buffer memory 1201 overflows, supply of clocks to the data read circuit for the first buffer memory 1201, the data write circuit for the second buffer memory 1203, and the data processing circuit 1202 is carried out at the completion of data transfer.

A data processing method of the data processing apparatus having the above-mentioned construction will be described with reference to figure 10.

Initially, a command issuing source, e.g., a processor, issues a data transfer command for processing the read data 1208 stored in the first buffer memory 1201, as a data processing command signal 1220, to the clock supply circuit 1205 and the data processing circuit 1202 (S101).

On receipt of the data processing command signal 1220, the clock supply circuit 1205 supplies clocks to the data read circuit for the first buffer memory 1201, the data write circuit for the second buffer memory 1203, and the data processing circuit 1202 (S102). That is, the clock supply circuit 1205 supplies a first clock 1211, a second clock 1212, and a third clock 1213 to the first memory control circuit 1204, the second memory control circuit 1206, and the data processing circuit 1202, respectively.

On receipt of the data processing command signal 1220, the data processing circuit 1202 outputs a read request signal 1214 to the first memory control circuit 1204, and the first memory control circuit 1204 outputs a first memory control signal 1216 for reading the read data 1208 stored in the first buffer memory 1201, to the first buffer memory 1201. Thereby, the read data 1208 in the first buffer memory 1201 is read to the data processing circuit 1202 (S103).

Then, the data processing circuit 1202 performs data processing on the read data 1208 (S104), and outputs a write request signal 1215 to the second memory control circuit 1206. Then, the second memory control circuit 1206 outputs a second memory control signal 1217 for writing the processed data 1209, to the second buffer memory 1203. Thereby, the processed data 1209 that is processed in the data processing circuit 1202 is written into the second buffer memory 1203 (S105).

Next, the data processing circuit 1202 judges whether predetermined data (one block of image data comprising 64 pieces of data, one macroblock of image data comprising 64×6 pieces of data, or the like) have been processed or not (S106).

When it is judged in step S106 that the predetermined data have been processed, the data processing circuit 1202 outputs a data processing command completion signal 1222 to the clock supply circuit 1205 to stop supply of clocks to the data read circuit for the first buffer memory 1201, the data write circuit of the second buffer memory 1203, and the data processing circuit 1202, and further, it outputs the data processing command completion signal 1222 to the processor. Thereby data processing is completed (S107). Thereafter, the processor issues a data transfer command signal 1218 to the clock supply circuit 1205 and the second memory control circuit 1206 (S108).

On receipt of the data transfer command signal 1218, the clock supply circuit 1205 supplies a second clock 1212 to the data read circuit for the second buffer memory 1203, i.e., the second memory control circuit 1206 (S109). Thereby, the second memory control circuit 1206 is operated.

On receipt of the data transfer command signal 1218, the second memory control circuit 1206 outputs a second memory control signal 1217 for reading the transfer data 1207 from the second buffer memory 1203, to the second buffer memory 1203. Thereby, the transfer data 1207 stored in the second buffer memory 1203 is read (S110).

When reading of the transfer data 1207 is completed (S111), the second memory control circuit 1206 outputs a data transfer command completion signal 1219 to the clock supply circuit 1205 to stop supply of the second clock 1212 to the data read circuit for the second buffer memory 1203, and further, it outputs the data transfer command completion signal 1219 to the processor to complete data transfer, whereby the successive processes are ended (S112).

When it is judged in step S106 that the predetermined data have not yet been processed, the data processing circuit 1202 outputs a write request signal 1215 to the second memory control circuit 1206. Then, the second memory control circuit 1206 judges whether the second buffer memory 1203 overflows or not (S113).

When it is judged in step S113 that the second buffer memory 1203 does not overflow, the processes in steps S103∼S106 are repeated again.

When it is judged in step S113 that the second buffer memory 1203 overflows, the second memory control circuit 1206 outputs a data transfer request signal 1221 to the processor to make a data transfer request, and further, it outputs the data transfer request signal 1221 to the clock supply circuit 1205 to stop supply of clocks to the data read circuit for the first buffer memory 1201, the data write circuit for the second buffer memory 1203, and the data processing circuit 1202 (S120). That is, it stops supply of the first clock 1211, the second clock 1212, and the third clock 1213 to the first memory control circuit 1204, the second memory control circuit 1206, and the data processing circuit 1202, respectively. Thereafter, the processor issues a data transfer command signal 1218 to the clock supply circuit 1205 and the second memory control circuit 1206 (S115). On receipt of the data transfer command signal 1218, the clock supply circuit 1205 supplies a second clock 1212 to the data read circuit for the second buffer memory 1203, i.e., the second memory control circuit 1206 (S116). Thereby, the second memory control circuit 1206 is operated. On receipt of the data transfer command signal 1218, the second memory control circuit 1206 outputs a second memory control signal 1217 for reading the transfer data 1207 from the second buffer memory 1203, to the second buffer memory 1203. Thereby, the transfer data 1207 stored in the second buffer memory 1203 is read (S117). When reading of the transfer data 1207 is completed (S118), the second memory control circuit 1206 outputs a data transfer command completion signal 1219 to the clock supply circuit 1205 to stop supply of the second clock 1212 to the data read circuit for the second buffer memory 1203, and further, it outputs the data transfer command completion signal 1219 to the processor to complete data transfer, whereby the successive processes are ended (S119). The processes from step S102 onward are repeated again.

As described above, the data processing method according to the fifth embodiment is provided with the clock supply circuit 1205 for supplying clocks according to commands issued from the command issuing source, supply of clocks can be stopped when data are not transferred and when data are not processed, whereby power consumption can be reduced.

Further, when the second buffer memory 1203 overflows, data transfer is carried out without terminating a data processing command as conventional, and thereafter, the rest of data processing is resumed at the completion of data transfer. Therefore, when the second buffer memory 1203 overflows, it is not necessary for the command issuing source to issue a data processing command again, whereby the command issuing source can reduce the number of commands to issue.

Furthermore, when making the above-mentioned data transfer request, supply of clocks to the data read circuit for the first buffer memory 1201, the data write circuit for the second buffer memory 1203, and the data processing circuit 1202 is stopped, and supply of clocks is not resumed until data transfer is completed. Therefore, even when a time has elapsed before issue of the data transfer command, an increase in power consumption can be avoided.

When completing data processing, a buffer memory free space information signal 1210, which indicates a free space or a space occupied by data in the second buffer memory 1203 where the processed data 1209 is to be written, may be output, whereby the number of transfer data at the next data transfer command can be estimated. As a result, maximum data transfer to the second buffer memory 1203 can be performed, whereby the number of times overflow of data occurs can be reduced.

### Embodiment 6.

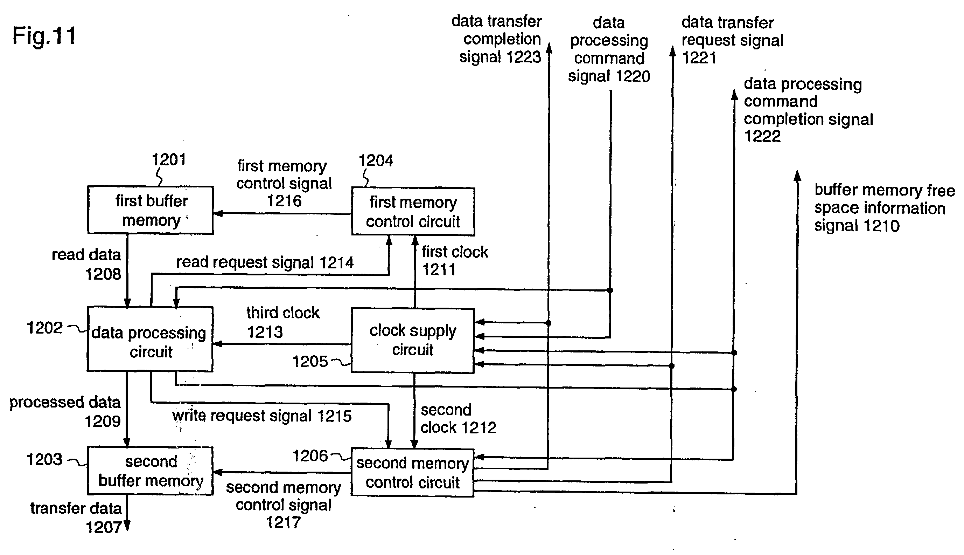

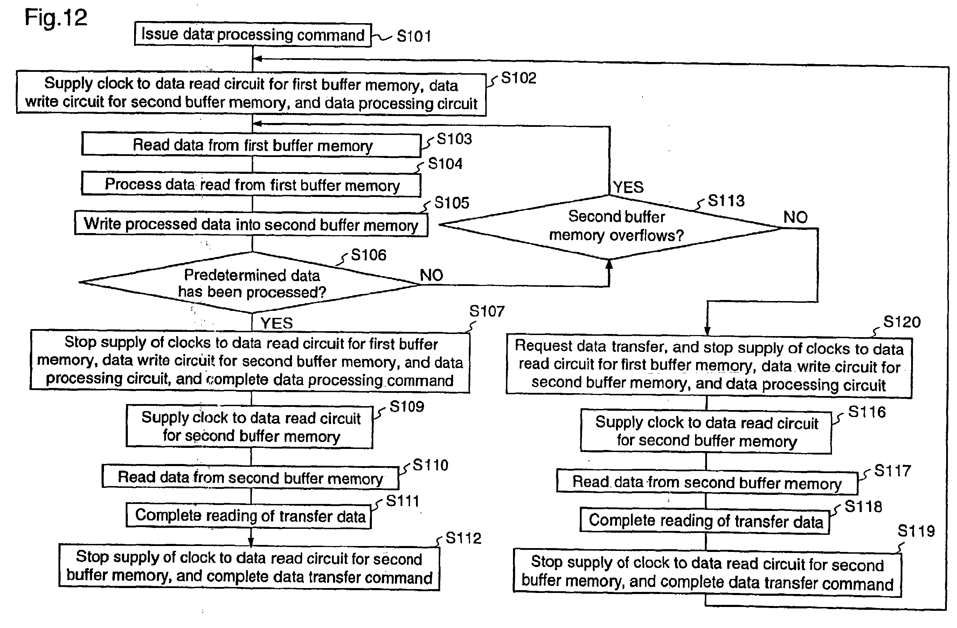

Hereinafter, a data processing apparatus according to a sixth embodiment will be described with reference to figures 11 and 12.

Figure 11 is a block diagram illustrating the construction of a data processing apparatus according to the sixth embodiment. In figure 11, the same or corresponding components as/to those shown in figure 9 are given the same reference numerals, and descriptions thereof will be omitted.

This sixth embodiment is different from the fifth embodiment in that no data transfer command is issued from the command issuing source, and data transfer is started at the completion of data processing.

Hereinafter, a data processing method of the data processing apparatus according to the third embodiment will be described with reference to figure 12.

Initially, a command issuing source, for example, a processor, issues a data transfer command for processing the read data 1208 stored in the first buffer memory 1201, as a data processing command signal 1220, to the clock supply circuit 1205 and the data processing circuit 1202 (S101).

On receipt of the data processing command signal 1220, the clock supply circuit 1205 supplies clocks to the data read circuit for the first buffer memory 1201, the data write circuit for the second buffer memory 1203, and the data processing circuit 1202 (S102). That is, the clock supply circuit 1205 supplies a first clock 1211, a second clock 1212, and a third clock 1213 to the first memory control circuit 1204, the second memory control circuit 1206, and the data processing circuit 1202, respectively.

On receipt of the data processing command signal 1220, the data processing circuit 1202 outputs a read request signal 1214 to the first memory control circuit 1204, and the first memory control circuit 1204 outputs a first memory control signal 1216 for reading the read data 1208 stored in the first buffer memory 1201, to the first buffer memory 1201. Thereby, the read data 1208 in the first buffer memory 1201 is read to the data processing circuit 1202 (S103).

Then, the data processing circuit 1202 performs data processing on the read data 1208 (S104), and outputs a write request signal 1215 to the second memory control circuit 1206. Then, the second memory control circuit 1206 outputs a second memory control signal 1217 for writing the processed data 1209, to the second buffer memory 1203. Thereby, the processed data 1209 that is processed in the data processing circuit 1202 is written into the second buffer memory 1203 (S105).

Next, the data processing circuit 1202 judges whether predetermined data (one block of image data comprising 64 pieces of data, one macroblock of image data comprising 64×6 pieces of data, or the like) have been processed or not (S106).

When it is judged in step S106 that the predetermined data have been processed, the data processing circuit 1202 outputs a data processing command completion signal 1222 to the clock supply circuit 1205, the processor, and the second memory control circuit 1206.

On receipt of the data processing command completion signal 1222, the clock supply circuit 1205 stops supply of clocks to the data read circuit for the first buffer memory 1201, the data write circuit for the second buffer memory 1203, and the data processing circuit 1202, i.e., it stops supply of the first clock 1211, the second clock 1212, and the third clock 1213 to the first memory control circuit 1204, the second memory control circuit 1206, and the data processing circuit 1202, respectively. On receipt of the data processing command completion signal 1222, the processor completes issue of the data processing command. Thereby, data processing is ended (S107).

Further, on receipt of the data processing command completion signal 1222, the clock supply circuit 1205 supplies a second clock 1212 to the data read circuit for the second buffer memory 1203, i.e., the second memory control circuit 1206 (S109).

On receipt of the data processing command completion signal 1222, the second memory control circuit 1206 outputs a second memory control signal 1217 for reading the transfer data 1207 from the second buffer memory 1203, to the second buffer memory 1203. Thereby, the transfer data 1207 stored in the second buffer memory 1203 is read (S110).

When reading of the transfer data 1207 is completed (Sill), the second memory control circuit 1206 outputs a data transfer completion signal 1223 to the clock supply circuit 1205 to stop supply of the second clock 1212 to the data read circuit for the second buffer memory 1203, and further, it outputs the data transfer end signal 1223 to the processor to complete data transfer, whereby the successive processed are ended (S112).

When it is judged in step S106 that the predetermined data have not yet been processed, the data processing circuit 1202 outputs a write request signal 1215 to the second memory control circuit 1206. Then, the second memory control circuit 1208 judges whether the second buffer memory 1203 overflows or not (S113).

When it is judged in step S113 that the second buffer memory 1203 does not overflow, the processes in steps S103∼S106 are repeated again.

When it is judged in step S113 that the predetermined data have been processed, the data processing circuit 1202 outputs a data processing command completion signal 1222 to the clock supply circuit 1205, the processor, and the second memory control circuit 1206. On receipt of the data processing command completion signal 1222, the clock supply circuit 1205 stops supply of clocks to the data read circuit for the first buffer memory 1201, the data write circuit for the second buffer memory 1203, and the data processing circuit 1202. On receipt of the data processing command completion signal 1222, the processor completes issue of the data processing command. Thereby, data processing is ended (S120). Further, on receipt of the data processing command completion signal 1222, the clock supply circuit 1205 supplies a second clock 1212 to the data read circuit for the second buffer memory 1203, i.e., the second memory control circuit 1206 (S116). Thereby, the second memory control circuit 1206 is operated. On receipt of the data transfer command signal 1218, the second memory control circuit 1206 outputs a second memory control signal 1217 for reading the transfer data 1207 from the second buffer memory 1203, to the second buffer memory 1203. Thereby, the transfer data 1207 stored in the second buffer memory 1203 is read (S117). When reading of the transfer data 1207 is completed (S118), the second memory control circuit 1206 outputs a data transfer command completion signal 1219 to the clock supply circuit 1205 to stop supply of the second clock 1212 to the data read circuit for the second buffer memory 1203, and further, it outputs the data transfer command completion signal 1219 to the processor to complete data transfer, whereby the successive processes are ended (S119). The processes from step S102 onward are repeated again.

As described above, since the data processing method according to the sixth embodiment is provided with the clock supply circuit 1205 for supplying clocks according to commands issued from the command issuing source, supply of clocks can be stopped when data are not transferred and when data are not processed, whereby power consumption can be reduced.

Further, when the second buffer memory 1203 overflows, data transfer is carried out without terminating a data processing command as conventional, and thereafter, the rest of data processing is resumed at the completion of data transfer. Therefore, when the second buffer memory 1203 overflows, it is not necessary for the command issuing source to issue a data processing command again, whereby the command issuing source can reduce the number of commands to issue.

Furthermore, when making the above-mentioned data transfer request, supply of clocks to the data read circuit for the first buffer memory 1201, the data write circuit for the second buffer memory 1203, and the data processing circuit 1202 is stopped, and supply of clocks is not resumed until data transfer is completed. Therefore, even when a time has elapsed before issue of the data transfer command, an increase in power consumption can be suppressed.

When completing processing, a buffer memory free space information signal 1210, which indicates a free space or a space occupied by data in the second buffer memory 1203 where the processed data 1209 is to be written, may be output, whereby the number of transfer data at the next data transfer command can be estimated. As a result, maximum data transfer to the second buffer memory 1203 can be carried out, whereby the number of times overflow of data occurs can be reduced.

### APPLICABILITY IN INDUSTRY

A data processing apparatus and a data processing method according to the present invention are valuable as those for performing data transfer without terminating data processing when underflow or overflow occurs, and controlling supply of clocks.

## Claims

1. A data processing apparatus which performs data transfer for writing transfer data into a first buffer memory according to a command outputted from a command issuing source, processes the transfer data read from the first buffer memory, with a data processing circuit, and writes the processed data into a second buffer memory, said apparatus including:
a clock supply circuit for performing supply of a first clock to a first data write circuit which writes the transfer data into the first buffer memory, and supply of a second clock to a data read circuit which reads the transfer data from the first buffer memory, the data processing circuit, and a second data write circuit which writes the processed data into the second buffer memory.

2. A data processing apparatus as defined in Claim 1, wherein
the first data write circuit includes a data transfer completion notification means for notifying the command issuing source and the clock supply circuit of the completion of the data transfer, when writing of the transfer data is completed;
when a data transfer command is issued from the command issuing source, the clock supply circuit performs supply of the first clock to start the data transfer; and
when the completion of the data transfer is notified by the data transfer completion notification means, the clock supply circuit stops the supply of the first clock.

3. A data processing apparatus as defined in Claim 1, wherein
the data processing circuit includes a data processing completion notification means for notifying the command issuing source and the clock supply circuit of the completion of the data processing when the data processing is completed;
when a data processing command is issued from the command issuing source, the clock supply circuit performs supply of the second clock to start the data processing; and
when the completion of the data processing is notified by the data processing completion notification means, the clock supply circuit stops the supply of the second clock.

4. A data processing apparatus as defined in Claim 1, wherein
the first data write circuit includes a data transfer completion notification means for notifying the command issuing source and the clock supply circuit of the completion of the data transfer, when writing of the transfer data is completed;
the data processing circuit includes a data processing completion notification means for notifying the command issuing source and the clock supply circuit of the completion of the data processing, when the data processing is completed;
when a data transfer command is issued from the command issuing source, the clock supply circuit performs the supply of the first clock to start the data transfer;
when the completion of the data transfer is notified by the data transfer completion notification means, the clock supply circuit stops the supply of the first clock to end the data transfer, and performs the supply of the second clock to start the data processing; and
when the completion of the data processing is notified by the data processing completion notification means, the clock supply circuit stops the supply of the second clock.

5. A data processing apparatus as defined in Claim 1, wherein
the data read circuit includes a judgement means for judging whether the first buffer memory underflows or not, before performing the data processing, and a data transfer request means which outputs a data transfer request signal for making a data transfer request to the command issuing source, when it is judged by the judgement means that the first buffer memory underflows.

6. A data processing apparatus as defined in Claim 1, wherein
the data read circuit includes a judgement means for judging whether the first buffer memory underflows or not, before performing the data processing, and a data transfer request means which outputs a data transfer request signal for making a data transfer request to the command issuing source and the clock supply circuit, when it is judged by the judgement means that the first buffer memory underflows; and
the clock supply circuit stops the supply of the second clock with an input of the data transfer request signal.

7. A data processing apparatus as defined in Claim 1, wherein
the first data write circuit includes a notification means for notifying a free space or a space occupied by data in the first buffer memory, when the data processing is completed.

8. A data processing apparatus which reads data stored in a first buffer memory according to a command outputted from a command issuing source to perform data processing with a data processing circuit, writes the processed data into a second buffer memory, and reads the processed data that is written in the second buffer memory to perform data transfer, said apparatus including:
a clock supply circuit for performing supply of a first clock to a first data read circuit which reads the data stored in the first buffer memory to the data processing circuit, the data processing circuit, and a data write circuit which writes the processed data into the second buffer memory, and supply of a second clock to a second data read circuit which reads the processed data that is stored in the second buffer memory and transfers the data.

9. A data processing apparatus as defined in Claim 8, wherein
the data processing circuit includes a data processing completion notification means for notifying the command issuing source and the clock supply circuit of the completion of the data processing when the data processing is completed;
when a data processing command is issued from the command issuing source, the clock supply circuit performs supply of the first clock to start the data processing; and
when the completion of the data processing is notified by the data processing completion notification means, the clock supply circuit stops the supply of the first clock.

10. A data processing apparatus as defined in Claim 8, wherein
the second data read circuit includes a data transfer completion notification means for notifying the command issuing source and the clock supply circuit of the completion of the data transfer when reading of the transfer data is completed;
when a data transfer command is issued from the command issuing source, the clock supply circuit performs supply of the second clock to start the data transfer; and
when the completion of the data transfer is notified by the data transfer completion notification means, the clock supply circuit stops the supply of the second clock.

11. A data processing apparatus as defined in Claim 8, wherein
the data processing circuit includes a data processing completion notification means for notifying the command issuing source and the clock supply circuit of the completion of the data processing when the data processing is completed;
the second data read circuit includes a data transfer completion notification means for notifying the command issuing source and the clock supply circuit of the completion of the data transfer when reading of the transfer data is completed;
when a data processing command is issued from the command issuing source, the clock supply circuit performs supply of the first clock to start the data processing;
when the completion of the data processing command is notified by the data processing completion notification means, the clock supply circuit stops the supply of the first clock to end the data processing, and performs the supply of the second clock to start the data transfer; and
when the completion of the data transfer is notified by the data transfer completion notification means, the clock supply circuit stops the supply of the second clock.

12. A data processing apparatus as defined in Claim 8, wherein
the data write circuit includes a judgement means for judging whether the second buffer memory overflows or not, before performing the data transfer, and a data transfer request means for outputting a data transfer request signal for making a data transfer request to the command issuing source, when it is judged by the judgement means that the second buffer memory overflows.

13. A data processing apparatus as defined in Claim 8, wherein
the data write circuit includes a judgement means for judging whether the second buffer memory overflows or not, before performing the data transfer, and a data transfer request means for outputting a data transfer request signal for making a data transfer request to the command issuing source and the clock supply circuit, when it is judged by the judgement means that the second buffer memory overflows; and
the clock supply circuit stops the supply of the first clock with an input of the data transfer request signal.

14. A data processing apparatus as defined in Claim 8, wherein
the second data read circuit includes a notification means for notifying a free space or a space occupied by data in the second buffer memory, when the data processing is completed.

15. A data processing method of performing data transfer for writing transfer data into a first buffer memory according to a command outputted from a command issuing source, processing the transfer data read from the first buffer memory, with a data processing circuit, and writing the processed data into a second buffer memory, said method including:
performing supply of a first clock to a first data write circuit which writes the transfer data into the first buffer memory, and supply of a second clock to a data read circuit which reads the transfer data from the first buffer memory, the data processing circuit which processes the transfer data, and a data write circuit which writes the processed data into the second buffer memory.

16. A data processing method as defined in Claim 15, wherein
when a data transfer command is issued from the command issuing source, supply of the first clock is carried out to start the data transfer; and
when writing of the transfer data is completed, the completion of the data transfer is notified to stop the supply of the first clock.

17. A data processing method as defined in Claim 15, wherein
when a data processing command is issued from the command issuing source, supply of the second clock is carried out to start the data processing; and
when the data processing is completed, the completion of the data processing is notified to stop the supply of the second clock.

18. A data processing method as defined in Claim 15, wherein
when a data transfer command is issued from the command issuing source, supply of the first clock is carried out to start the data transfer;
when writing of the transfer data is completed, the completion of the data transfer is notified;
when the completion of the data transfer is notified, the supply of the first clock is stopped to end the data transfer, and supply of the second clock is carried out to start the data processing; and
when the data processing is completed, the completion of the data processing is notified to stop the supply of the second clock.

19. A data processing method as defined in Claim 15, wherein
before performing the data processing, it is judged whether the first buffer memory underflows or not; and
when it is judged that the first buffer memory underflows, a data transfer request is carried out.

20. A data processing method as defined in Claim 15, wherein
before performing the data processing, it is judged whether the first buffer memory underflows or not; and
when it is judged that the first buffer memory underflows, the supply of the second clock is stopped, and a data transfer request is carried out.

21. A data processing method as defined in Claim 15, wherein
when the data processing is completed, a free space or a space occupied by data in the first buffer memory is notified.

22. A data processing method of reading data stored in a first buffer memory to perform data processing with a data processing circuit, writing the processed data into a second buffer memory, and reading the processed data that is written in the second buffer memory to perform data transfer, said method including:
performing supply of a first clock to a first data read circuit which reads the data stored in the first buffer memory to the data processing circuit, the data processing circuit which processes the data, and a data write circuit which writes the processed data into the second buffer memory, and supply of a second clock to a second data read circuit which reads the processed data that is stored in the second buffer memory and transfers the data.

23. A data processing method as defined in Claim 22, wherein
when a data processing command is issued from the command issuing source, supply of the first clock is carried out to start the data processing; and
when the data processing is completed, the completion of the data processing is notified to stop the supply of the first clock.

24. A data processing method as defined in Claim 22, wherein
when a data transfer command is issued from the command issuing source, supply of the second clock is carried out to start the data transfer; and
when reading of the transfer data is completed, the completion of the data transfer is notified to stop the supply of the second clock.

25. A data processing method as defined in Claim 22, wherein
when a data processing command is issued from the command issuing source, supply of the first clock is carried out to start the data processing;
when the data processing is completed, the completion of the data processing is notified to stop the supply of the first clock, thereby ending the data processing, and supply of the second clock is carried out to start the data transfer; and
when reading of the transfer data is completed, the completion of the data transfer is notified to stop the supply of the second clock.

26. A data processing method as defined in Claim 22, wherein
before performing the data transfer, it is judged whether the second buffer memory overflows or not; and
when it is judged that the second buffer memory overflows, a data transfer request is carried out.

27. A data processing method as defined in Claim 22, wherein
before performing the data transfer, it is judged whether the second buffer memory overflows or not; and
when it is judged that the second buffer memory overflows, the supply of the first clock is stopped, and a data transfer request is carried out.

28. A data processing method as defined in Claim 22, wherein
when the data transfer is completed, a free space or a space occupied by data in the second buffer memory is notified.
